# EUROPEAN PATENT SPECIFICATION

(11) **EP 3 955 189 B1**
(45) Date of publication and mention of the grant of the patent: **21.10.2026**
(21) Application number: 21152058.0
(22) Date of filing: 18.01.2021
(51) Int. Cl.: G06Q 10/087, G06Q 10/0631, B25J 9/16, G05B 19/418, G06Q 10/08

(54) **DYNAMICALLY GENERATING SOLUTIONS FOR UPDATING PLANS AND TASK ALLOCATION STRATEGIES**
DYNAMISCHE ERZEUGUNG VON LÖSUNGEN FÜR AKTUALISIERUNGSPLÄNE UND AUFGABENZUTEILUNGSSTRATEGIEN
GÉNÉRATION DYNAMIQUE DE SOLUTIONS DE MISE À JOUR DE PLANS ET DE STRATÉGIES D'ATTRIBUTION DE TÂCHES

(30) Priority: 15.08.2020 US 202016994556
(43) Date of publication of application: 16.02.2022
(73) Proprietor: Rapyuta Robotics Co., Ltd., Tokyo 104-0033 (JP)
(72) Inventor: SHARMA, Abhishek, Tokyo, 104-0033 (JP)
(74) Representative: FRKelly

(56) References cited:
- EP-A1- 3 396 607
- EP-A1- 3 579 174
- US-A1- 2020 016 754
- US-B2- 9 833 901
- SELÇUK CANBEK ET AL: "DDS-BASED HETEROGENEOUS ROBOTS COMMUNICATION MIDDLEWARE", SDU INTERNATIONAL JOURNAL OF TECHNOLOGIC SCIENCES, vol. 3, no. 3, 1 February 2011 (2011-02-01), pages 95 - 100, XP055490233
- STEFAN-GABRIEL CHITIC ET AL: "SDfR -Service discovery for multi-robot systems", ICAART 2016 THE 8TH INTERNATIONAL CONFERENCE ON AGENTS AND ARTIFICIAL INTELLIGENCE, 1 February 2016 (2016-02-01), XP055490243, Retrieved from the Internet <URL:https://hal.archives-ouvertes.fr/hal-01286895/file/ICAART2016.pdf> [retrieved on 20180704]
- BENEDETTI M DE ET AL: "JarvSis: a distributed scheduler for IoT applications", CLUSTER COMPUTING, BALTZER SCIENCE PUBLISHERS, BUSSUM, NL, vol. 20, no. 2, 5 April 2017 (2017-04-05), pages 1775 - 1790, XP036510284, ISSN: 1386-7857, [retrieved on 20170405], DOI: 10.1007/S10586-017-0836-1

## Description

### TECHNICAL FIELD

This invention is generally related to the field of plan execution and task allocation strategies by heterogeneous autonomous mobile devices and cloud device systems, and more particularly related to dynamically generating solutions for updating existing plans and existing task allocation strategies.

### BACKGROUND

Internet of Things (IoT) and robotics are two areas that have grown exponentially in the past few years. IoT includes a network of devices that work in collaboration to perform a particular task. Similarly, in robotics several robots work in collaboration to perform multiple diverse tasks.

The use of robots has grown exponentially in the last decade. Robots are currently used in all fields, including warehouse automation. Today, for Multi robot coordination, there are multiple challenges. The need for multi robot coordination makes the system complex and difficult to maintain. These systems are also not able to make effective runtime or dynamic decisions in an operating environment, like a warehouse.

XP055490233 (Aksoy, Ekrem; Canbek, Selguk; Adar, Nihat " DDS-BASED HETEROGENEOUS ROBOTS COMMUNICATION MIDDLEWARE" SDU International Journal of Technological Science . Feb 2011 Special Issue, Vol. 3 Issue 1, pages 95-100) discloses OMG (Object Management Group) DDS (Data Distribution Service for Real-time Systems) an open international communication middleware standard for real-time and embedded systems. In this paper, a communication middleware model based on OMG DDS for multi-robot environments is presented. With the help of DDS QoS mechanism and Publish/Subscribe paradigm, proposed communication middleware abstracts different robot implementations sharing same domain (i.e. heterogeneity).

EP 3 396 607 A1 discloses systems and methods to enable exchange of semantic knowledge of resource data and task data between heterogeneous resources in a constrained environment wherein cloud infrastructure and cloud based knowledge repository is not available. Ontology based semantic knowledge exchange firstly enables discovery of available resources in real time. New tasks may evolve at runtime and so also resource data associated with the resources may vary over time.

US 2020/016754 A1 discloses a system and method to control execution of a centralized and decentralized controlled plan, has been described. A plan execution engine executing at a cloud node, receives sensor data captured by one or more sensors at a plurality of autonomous robots and a plan execution status of the centralized controlled plan. The plan execution engine executing at the cloud node, determines whether the plurality of autonomous robots satisfy a transition condition. Next a determination is made one or more activated constraints and task allocation for one or more autonomous robots in the next state. Next the plan execution engine executing at the cloud node and autonomous robots collaboratively determine a constraint solution for the activated one or more plan constraints. Finally based on the determined constraint solution, the one or more plan execution engines sends instructions to an actuator for executing the task included in the centralized controlled plan.

### SUMMARY

The invention relates to a computer implemented method to dynamically update one or more existing plans and one or more existing task allocation strategies deployed on a plurality of heterogeneous autonomous mobile robots according to claim 1. The invention also relates to a system to dynamically update one or more existing plans and one or more existing task allocation strategies deployed on at a plurality of heterogeneous autonomous mobile robots according to claim 11. The invention also relates to a computer-readable medium comprising instructions which, when executed by a computer, cause the computer to carry out the method of any one of claims 1 to 10.
Advantageous embodiments are set out in the dependent claims. The scope of protection is defined by the appended claims.
The following is a brief summary of subject matter that is described in greater detail herein. This summary is not intended to be limiting as to the scope of the claims. These and other features of the invention will be more readily understood upon consideration of the attached drawings and of the following detailed description of those drawings and the presently-preferred and other embodiments of the invention.

Described herein are various technologies pertaining to dynamically update plans and task allocation strategies on at least one or more of cloud and plurality of heterogeneous autonomous mobile robots has been described. The system or platform includes a catalog store that includes plurality of plans and task allocation strategies, plan execution engines running on the cloud and plurality of heterogeneous autonomous mobile devices, and plan execution engines in communication with modules in the cloud executing the instructions. The system or a platform continuously monitors various events internally and externally. The platform analyzes the existing plans and task allocation strategies that may need to be updated or replaced. The platform generates solutions depending on various factors and identifies relevant plans and task allocation strategies that may need to be updated. Based on the solutions that are generated, the existing plans and task allocation strategies may be updated or replaced. Once the updation of plans and task allocation strategies are performed, the platform deploys the updated plans and tasks allocation strategies on at least one or more of the cloud and plurality of heterogeneous autonomous mobile devices.

In accordance with an aspect of the disclosure, the system performs analysis of existing plans and existing task allocation strategies that includes analyzing a received notification indicating that heterogeneous autonomous mobile robots has acquired a new capability, aligning generated solutions to the new acquired capability, and identifying new plans and new task allocation strategies based on the one or more aligned solutions. Furthermore, the generation of solutions includes: identifying roles of autonomous mobile robots; based on the identifying, determining a new plan and new tasks that has a higher priority over the affinity factor over other plans of the catalog store; and mapping new values to the new plan variable of determined plan and allocating determined tasks to the autonomous mobile robot.

In accordance with another aspect of the disclosure, the system verifies that the identified new plans are compatible with existing plans and identified new task allocation strategies are compatible with one or more existing task allocation strategies, and based on the verifying, mapping plan variables of the identified new plans and task allocation strategy variables of the identified new task allocation strategies with new values. Furthermore, the system generates solutions that includes: comparing values of at least one or more of a platform variable, a plan variable, and a task allocation strategy variable related to autonomous mobile robots with threshold values, based on the comparison, identifying a new plan and a new task allocation strategy for updating the deployed plan and deployed task allocation strategy on autonomous mobile robots; and mapping variables of identified new plan and variables of identified new task allocation strategies with new values. Furthermore, the generation of solution includes: comparing one or more values of at least one or more of a platform variable, a plan variable, and a task allocation strategy variable related to one or more of autonomous mobile robots with threshold values; based on the comparison, identifying a new plan and a new task allocation strategy for updating the deployed plan and deployed task allocation strategy on autonomous mobile robots; and mapping variables of identified new plan and variables of identified new task allocation strategies with new values.

In accordance with another aspect of the disclosure, the system further includes :
expanding a new capability of a new autonomous mobile robot to heterogeneous autonomous mobile robots, wherein the new autonomous mobile robot is of a different robot type, identifying plans and new task allocation strategies compatible with the new capability; and deploying the identified plans and identified task allocation strategies on the heterogeneous autonomous mobile robots.

In accordance with another aspect of the disclosure, the system further includes:
determining an affinity factor related to at least one or more of the autonomous mobile robots;
identifying new plan and new task allocation strategy based on the determined affinity factor;
updating the deployed plan and deployed task allocation strategy with identified plan and identified task allocation strategy; and deploying the updated plan and updated task allocation strategy on the autonomous mobile robots. The system further includes:
   analyzing a notification, from at least one or more of plan execution engines running on autonomous mobile robots, autonomous mobile robots, and cloud; based on analysis of the notification, verifying that the existing plan and existing task allocation strategy, executing on the autonomous mobile robot, supports a new behavior; identifying new plan and task allocation strategy for supporting the new behavior based on the verifying; and mapping new values to the new plan variable of the identified plan and new values to the new task allocation strategy variable of the identified task allocation strategy to the autonomous mobile robot.

In accordance with another aspect of the disclosure, the **system further includes:**
analyzing a change in values of variables of at least one or more of plans and task allocation strategies deployed on the cloud and plurality of heterogeneous autonomous mobile devices;
based on analysis of the change, deploying at least one or more plans and task allocation strategies to the one or more of the heterogeneous autonomous mobile devices; and initiating a new operation on the one or more heterogeneous autonomous mobile devices. The system further includes : searching for plans in a plan catalog and task allocation strategies in a task catalog based on historical data; analyzing historical data related to searched plans in the plan catalog and searched task allocation strategies in the task catalog; and based on analysis of historical data, selecting a new plan from the searched plans in the plan catalog and a new task allocation strategy from the one or more searched task allocation strategies in the task catalog.

In accordance with another aspect of the disclosure, the system further includes:
receiving variables to be tracked, wherein the variables are related to autonomous mobile devices; identifying new plans and new task allocation strategies based on at least (a) one or more of comparing the received variables with threshold values and (b) compatibility of the new plans and new task allocation strategies with deployed plans and deployed task allocation strategies; and sending a warning notification at least based on one or more of comparing the received variables being below threshold values and mismatch in the compatibility. Furthermore, the system includes: receiving tasks to be executed by the plurality of heterogeneous autonomous mobile devices; comparing the variables related to deployed plans and deployed task allocation strategies with threshold values; rejecting or allocating tasks to the plurality of heterogeneous autonomous mobile devices based on comparison of the variables; and updating the variables related to existing plans and existing task allocation strategies if tasks are allocated.

In accordance with another aspect of the disclosure, the system further includes:
analyze a change in capability of autonomous mobile devices; based on analyzing the change, search for software code in an agent catalog; identify a software code from the agent catalog which is compatible with the capability of the one or more autonomous mobile devices; and upgrade the existing software code of the or more autonomous mobile devices with the identified software code. The system further includes: notify the update in plans and task allocation strategies to the plurality of heterogeneous autonomous mobile devices; in response to notifying the update, prioritize the autonomous mobile device that acquired new capability over other heterogeneous autonomous mobile devices; and based on the prioritization, allocate new tasks to the autonomous mobile device that acquired new capability. The system further includes :check compatibility of new plan and task allocation strategy with deployed plan and deployed task allocation strategy; and based on the compatibility check, abort the update of deployed plans and deployed task allocation strategy on plurality of heterogeneous autonomous mobile devices.

In accordance with another aspect of the disclosure, the system further includes:
a popularity module for enabling users to become popular or receive increased licensing fees based on at least one or more of popularity of their imported proprietary plans, usage by the community, review comments, user friendliness of the software code, plans, task allocation strategies, multiple core features, and review scores. The system further includes: analyze the variables related to at least one or more of the existing plans and existing task allocation strategies; compare values of analyzed variables with threshold values; and based on comparison of values, search for at least one or more plans and one or more task allocation strategies in a catalog store; and identify a new plan and a task allocation strategy from the searched plans and searched task allocation strategies based on at least one or more factors including historical data, role of robot, type of robot, and capability of robot.

The technologies described herein are related to a robust platform or a system that permits dynamic decision making or at runtime or while active or idle in an operating environment, to ensure optimal performance at the workplace. In an exemplary embodiment, the platform may rely on at least one or more of historical data, robot related features, environment related features, context specific features, customized features, variables related to at least one or more of system/platform, task allocation strategies, and plan etc. for generating solutions to identify the appropriate new plans and task allocation strategies for updating the existing plans and existing task allocation strategies.

It should be appreciated that the above-described subject matter may also be implemented as a computer-controlled apparatus, a computer process, a computing system, or as an article of manufacture such as a computer-readable medium. These and various other features will be apparent from a reading of the following Detailed Description and a review of the associated drawings.

The above summary presents a simplified summary in order to provide a basic understanding of some aspects of the systems and/or methods discussed herein.

### BRIEF DESCRIPTION OF THE DRAWINGS

The specific features, aspects, and advantages of dynamically generating solutions for updating plans and task allocation strategies implementations described herein will become better understood with regard to the following description, appended claims, and accompanying drawings where:
**FIG. 1** is a block diagram illustrating a system 100 for dynamically generating solutions for updating plans and task allocation strategies, according to an embodiment.
**FIG. 2** is a block diagram illustrating a system 200 to dynamically manage updation of plans and task allocation strategies for a fleet of heterogeneous robots.
**FIG. 3** is an exemplary and non-limiting flow diagram illustrating a process to deploy updated plans and task allocation strategy for execution, according to an embodiment.
**FIG. 4** is an exemplary flow diagram illustrating process steps for updating plan and task allocation strategy for an autonomous mobile device, according to an embodiment.
**FIG. 5** is an exemplary flow diagram illustrating process steps for updating the plan, according to an embodiment.
**FIG. 6** is an exemplary flow diagram illustrating process steps for updating plans and task allocation strategies, according to an embodiment.

Although the specific features of the present invention are shown in some drawings and not in others, this is done for convenience only as each feature may be combined with any or all of the other features in accordance with the present invention. The ordering of blocks in the drawings are not restrictive and can be interchanged in any order in accordance with the present invention. The start and end blocks in the figures may not be construed as limiting as they may indicate one of the many representations as part of software code development. The above figures present a basic understanding of some aspects of the systems and/or methods discussed herein. The drawings are not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

### DETAILED DESCRIPTION

Embodiments of techniques to provide a platform for dynamically generating solutions or generating solutions at runtime in an operating environment to update or switch plans and task allocation strategies on heterogeneous devices, such as robots are described herein. Reference throughout this specification to "one embodiment", "this embodiment" and similar phrases, means that a particular feature, structure, or characteristic described in connection with the embodiment is included in at least one or more embodiments. Thus, the appearances of these phrases in various places throughout this specification are not necessarily all referring to the same embodiment. Furthermore, the particular features, structures, or characteristics may be combined in any suitable manner in one or more embodiments.

Any combination of one or more computer readable media may be utilized. The computer readable media may be a computer readable signal medium or a computer readable storage medium. A computer readable storage medium may be, for example, but not limited to, an electronic, magnetic, optical, electromagnetic, or semiconductor system, apparatus, or device, or any suitable combination of the foregoing. More specific examples (a non-exhaustive list) of the computer readable storage medium would include the following: a portable computer diskette, a hard disk, a random access memory (RAM), a read-only memory (ROM), an erasable programmable read-only memory (EPROM or Flash memory), an appropriate optical fiber with a repeater, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium that can communicate, propagate, or transport a program for use by or in connection with an instruction execution system, apparatus, or device. Program code embodied on a computer readable signal medium may be transmitted using any appropriate medium, including but not limited to wireless, wireline, optical fiber cable, RF, or any suitable combination of the foregoing.

Computer program code for carrying out operations for aspects of the present disclosure may be written in any combination of one or more programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS), Platform as a Service (PaaS) or Infrastructure as a Service (IaaS) or Robotics as a Service (RaaS) or Warehouse as a Service (WaaS) or Collaborative robots (cobots) as a Service or other service models.

Aspects of the present disclosure are described herein with reference to flowchart illustrations and/or block diagrams of methods, apparatuses (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable instruction execution apparatus, create a mechanism for implementing the functions/acts specified in the flowchart and/or block diagram block or blocks.

These computer program instructions may also be stored in a computer readable medium that when executed can direct a computer, other programmable data processing apparatus, or other devices to function in a particular manner, such that the instructions when stored in the computer readable medium produce an article of manufacture including instructions which when executed, cause a computer to implement the function/act specified in the flowchart and/or block diagram block or blocks. The computer program instructions may also be loaded onto a computer, other programmable instruction execution apparatus, or other devices to cause a series of operational steps to be performed on the computer, other programmable apparatuses or other devices to produce a computer implemented process such that the instructions which execute on the computer or other programmable apparatus provide processes for implementing the functions/acts specified in the flowchart and/or block diagram block or blocks.

As will be appreciated by one skilled in the art, aspects of the present disclosure may be illustrated and described herein in any of a number of patentable classes or contexts including any new and useful process, machine, manufacture, or composition of matter, or any new and useful improvement thereof. Accordingly, aspects of the present disclosure may be implemented as entirely hardware, entirely software (including firmware, resident software, micro-code, or other suitable types of software) or combining software and hardware implementation that may all generally be referred to herein as a "circuit," "module," "component," or "system" or "platform" or "apparatus.". Furthermore, aspects of the present disclosure may take the form of a computer program product embodied in one or more computer readable media (e.g., tangible, non-transitory computer readable media) having computer readable program code embodied thereon. The present disclosure refers to terms like 'users', 'developers', 'designer', 'third parties', 'warehouse owner', 'robotics solutions provider' etc. and are used in several or specific embodiments, however, the terms are not restricted to those specific embodiments and can be replaced by other term(s) as the invention is not restricted or limited by these terms.

A device is an object or a physical entity having a unique identifier and an ability to transfer data over the internet. In one embodiment, the device is a 'thing' in the Internet of Things (IoT). A thing, in the IoT context, refers to an entity or physical object that has a unique identifier, an embedded system, and the ability to transfer data over a network. These devices may include physical devices, home appliances, vehicles, edge devices, fog devices, etc. The device also includes robots that can perform actuation and sensing along with other device functionalities.

The term "plan" can be defined in multiple ways and nowhere should it be construed as restrictive. The simplest way to describe a plan is a list of behaviours to be executed one after the other. It is a structure that is used to formulate more complex recipes or sub plans. There are various representations of such recipes or policies, which extend this simple description. The basic concept of plans is strongly related to finite automata, which not only allows the formulation of sequences of actions, but also of loops and conditional execution. Hence, a plan p in the set of Plans P is a structure of states and the transitions between them. In one of the embodiments, a plan 'charging' may contain two tasks: one for a set of robots to queue for charging and one for another set of robots to dock and get charged. In one embodiment, a plan may also include a "robot behaviour". Robot behaviour is a low level atomic activity, within a plan, executed by a robot under certain conditions. In another embodiment of the invention, the 'charging' plan includes three states: robot waiting state, robot docking state, and robot charging state. In one embodiment, the plan is a collection of states that represent stages during the execution of the plan.

A plan tree may include plans such as charging plan, navigation plan, autonomous mode plan, pick and place objects plan, lifting plan etc. The robots are shifted as per the states of the plan. Sometimes, the robot may be in a 'charging' state and later, they may be pulled out of the 'charging' state and shifted to 'autonomous mode' state of carrying and picking a pallet. So, for these two plans - 'charging' plan and 'autonomous pick and carry' plan, a sub-plan called 'navigation' plan may be used. A sub-plan is a portion of the plan that achieves one or more goals or a portion of the goal to be achieved by the plan.

Each pair of states in the plan may be linked by a transition. A transition is a condition that needs to be satisfied in order for a robot to traverse from its current state to the next state. In each state, one or more AMRs execute a set of sub-plans within the plan. The one or more AMRs may transition to the next state either after successful execution of the sub-plans, when the task fails, or when execution of sub-plans becomes irrelevant. The transition condition may be defined as a boolean expression including the different plan variable and plan variable values that needs to be satisfied in order to transition to the next plan state.

A plan execution engine includes a logic for executing a plan, allocating tasks by one or more heterogeneous devices and/or cloud. A plan may include several sub-plans that in combination form the plan. Robot behaviour is a low level atomic activity, within a plan, executed by a robot under certain conditions. For example, a "robot charging" plan may include three states: robot waiting state, robot docking state, and robot charging state.

Consider a user has developed a plan and a task allocation strategy for execution for a team of Automated Guided Vehicle (AGV)s and for execution for a team of forklifts. The plan includes functionalities like route planning, navigation, local obstacle avoidance, LiDAR scanners, which may be common for a team of forklifts and there may be some functionalities which may be different for forklifts. At design time, user or third-party developers are allowed to drag and drop the plans on the user interface. In a warehouse environment, the platform handles the coordination between heterogeneous devices- for example, a team of Automated Guided Vehicles (AGVs) and a team of Forklifts. Additionally, if the plan and task allocation strategy has to be replaced for a pick assist robot instead of AGV, then, the entire process of coordination and implementing varying functionalities, which is generally different, is taken care of by the platform. So, the present disclosure includes a generic platform that enables one or more plans and one or more task allocation strategies meant for a team of AGVs and forklifts to be replaced with one or more plans and task allocation strategies that work for other teams of devices, like pick assist robots.

Consider a navigation scenario for e.g. a 4ft robot or a robot having 1 metre radius. For this, a developer has to write embedded code, build a middleware, a navigation stack, laser scanner, localization, obstacle avoidance algorithm etc. This requires years of efforts for a developer or team of developers to build an application that handles these complexities. The present disclosure refers to a generic platform which allows a user to use readily available plans and task allocation strategies for different robots and in different scenarios without spending considerable effort and in addition, allows robots to coordinate amongst themselves to handle dynamic situations, like battery level of a robot falling below a critical threshold while navigating in a working environment etc. The platform allows users to design and deploy individual robots as well as multi robot generic scenarios. The coordination primitives are generic so that different tasks like fork lifting, collision avoidance, picking etc. are seamlessly handled by the platform.

The present invention solves a technical problem in the field of updating plans and task allocation strategies by a cloud and/or multiple heterogeneous autonomous robots. The invention addresses the problem of decision making while the multiple autonomous robots are navigating and provides alternative relevant plans and task allocation strategies for execution based on at least one or more factors like customized plan, platform, task allocation strategy variables, for example, navigation time, pick time, maximum robots per task, maximum robots in a fleet etc, robot type, capability, role, behavior etc. Further, the solutions that are generated to address the runtime problems allow the set of autonomous robots to continue with the regular functioning based on the missions given to the set of robots. One of the objectives of the platform is to significantly reduce the efforts for a user to build systems so that they are required to provide minimal information at plan level or task allocation strategy level. The platform is intelligent enough to identify the tasks (for example, how much should the wheel rotate, when should a brake be applied etc.) and may enforce the tasks on the AMRs along with deploying the alternative plans and task allocation strategies as per the pre-defined or dynamic solutions discussed herein.

It is understood that the present invention refers to various terms that are interchangeable and may be used in one or more embodiments interchangeably. In one embodiment, for example, the term 'existing plans' may be interchanged by 'deployed plans' in one or more embodiments without any change in the scope or implementation of the invention as per one of its usage in the operating environment. Such interchange may not be considered limiting and such interchange are considered within the scope of the invention.

In one embodiment, the cloud device management system or cloud device system may be a Platform-as-a-Service (PaaS) framework including several software and hardware components that allows building, provisioning, and deploying an application at a cloud or a device.

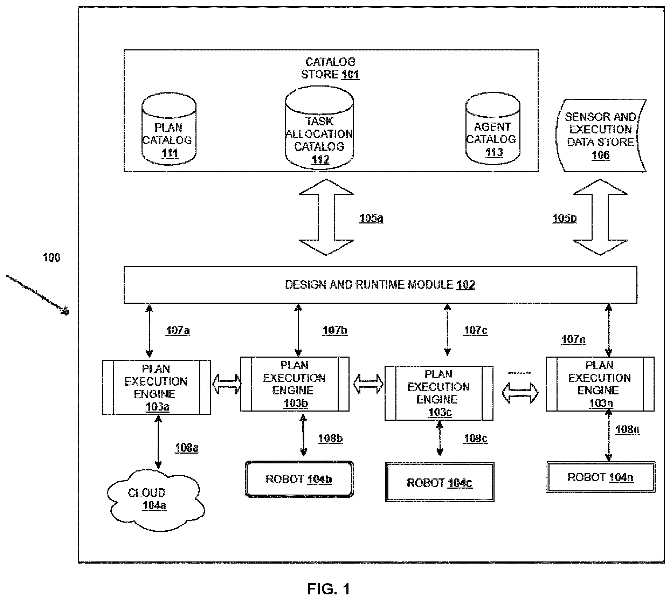

FIG. 1 is a block diagram illustrating a system 100 for dynamically generating solutions for updating plans and task allocation strategies, according to an embodiment. It is understood that the term 'dynamically' may include runtime or post-deployment operations or while the autonomous mobile device is in different states, like active or idle in an operating environment. The term 'dynamic' or 'runtime' may not be construed restrictive or limiting and may be construed within the scope of the invention. In one of the embodiments, a catalog store 101 may include multiple catalogs like Plan catalog 111, Task allocation catalog 112, Agent catalog 113 etc. Task allocation catalog 112 may be used by platforms to retrieve different task allocation strategies, for example, assign order based on shortest distance or assign order based on reducing overall time required to process orders. The plan catalog 111 includes plurality of individual plans and sub-plans. In one embodiment, there may be a dependency or relation between the plan and task catalog. These catalogs are used by a deployment and runtime (DR) module 102 to generate solutions that help update one or more plans and/or task allocation strategies. This update leads to implementation of a new behavior among the heterogeneous AMRs in the fleet. The DR module 102 may refer to Agent Catalog 113 for the robot specific code or firmware/embedded code which may be retrieved if an alternate plan and task allocation strategy has to be switched with the existing plans and task allocation strategy executing on the one or more heterogeneous AMRs. In one embodiment, this communication between the Agent Catalog 113 and the DR module 102 may be used for narrowing the search scope for identifying the relevant plans and task allocation strategies. The Agent Catalog 113 may include software code of different types of robots - say 3 wheeled drive robot, single wheel forklift or AGV, definition of different types of robots, local navigation plans and information like whether LiDar scanners are available for a specific type of robot etc. The three catalogs - plan catalog 111, task allocation catalog 112, and agent catalog 113 are the entities that expose variables, stores and maintain metadata, used by DR module 102. The metadata gives details to the DR module 102 on various variables (plan variable, task allocation strategy variable) and also directs the mapping of variables, for e.g. for forklift, what's the forklift dimension, which wheel is the powered wheel, etc. These catalogs are defined and made available as standard packages on the platform.

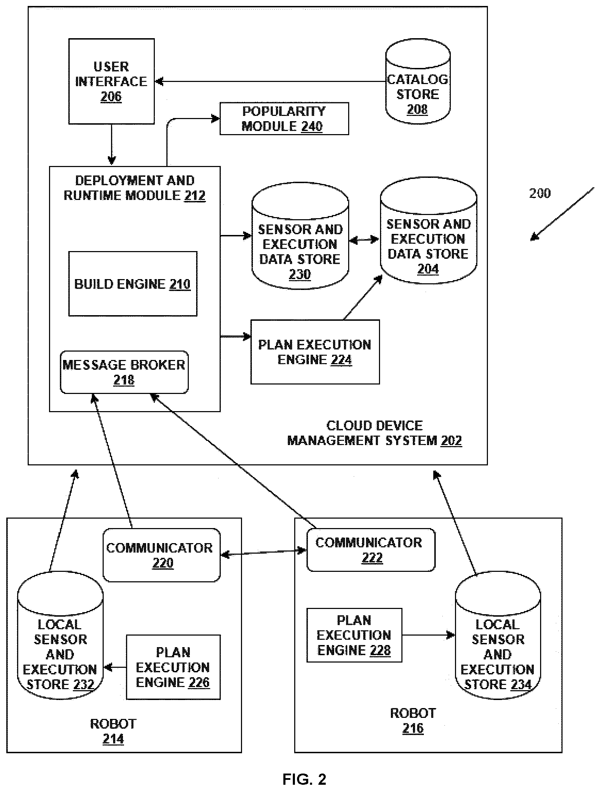

In one embodiment, data may be generated during execution of the plan and task allocation strategies on the cloud and heterogeneous AMRs. For example, the generated data may include sensor data collected by the devices, result of execution of any device behaviour, communication with a new device etc. In one embodiment, data generated during execution of a plan and task allocation strategy is stored in a sensor and execution data store 106. The sensor and execution data store may also be stored in a cloud device management system, as disclosed, later in FIG. 2. One or more plan execution engines 103b, 103c..103n running on the AMRs 104b, 104c, ...104n executing the plan and task allocation strategies, updates the sensor and execution data store 106 with any sensor data captured by the robots or execution result of executing an action of the plan and/or task allocation strategies by the plan execution engines running on the robots or the cloud. The DR module 102 is an interface between the plan execution engines 103a...103n and the catalog store 101 and sensor execution data store 106. In one embodiment, sensor and execution data store 106 also receives a constraint solution from the DR module 102 based on the two-way communication with the one or more plan execution engines 103a..103 executing the one or more plans and task allocation strategies. A constraint solution is a solution determined by DR module 102 in collaboration with plan execution engine 103a and other plan execution engines 103b...103n, and depending on the current state of the robot or the task that is currently executing. In one embodiment, the different plan execution engines may publish or broadcast the state of their corresponding autonomous mobile robots that is subscribed to by the plan execution engine of the other autonomous mobile robots. The communication may be established using communication mechanisms provided by Robot Operating System, Data distribution Service, or using simple UDP proxy, etc. The plan execution engine may communicate with each other within a particular communication frequency range, for example, 15 Hz to 30 Hz.

In one embodiment, the platform 100 disclosed in FIG. 1 may be similar to the assignee's platform, "Rapyuta.io" platform and the robot 104b may be similar to a pick-assist AMR, named "Sootballs", one of the robots, developed by the assignee, Rapyuta Robotics Co., Ltd. The other robots 104c..104n may be any other type of robots developed by the assignee or other device manufacturers. In one embodiment, the autonomous mobile robots include processors for executing the instructions and memory for storage. In another embodiment, the DR module 102 may proactively provide context based solutions anticipating potential challenges or opportunities while the fleet of heterogeneous AMRs may be navigating in an operating environment, like a warehouse. There are various scenarios, faced by AMRs in a workspace or an operating environment, discussed herein that are handled by the platform to generate solutions for making optimal decisions. Some of the solutions provided by the module 102 may be related to scenarios like managing charging of AMRs in a warehouse - identifying the AMR to be charged first among a set of AMRs or if there are multiple slots, preferring a specific type of AMR that may get a higher priority for a specific slot or in route planning decisions or identifying the robot which is prioritized to get stack of software or software updates, or based on other robot related plan or task allocation strategy variables, for example, ability to rotate in-place, turn in radius, navigation time, charging time etc. The DR module 102 may handle all the primitives, generates the plan- for example charging, navigation, multi-robot coordination tasks, or other tasks like robot waiting queue, narrow aisle turn, complex tasks like deadlock avoidance, obstacle avoidance etc. and provides a generic interface to handle such complex and varying tasks. When the plan and task allocation strategy are to be deployed, all the tasks may be integrated into packages and deployed onto the heterogeneous devices.

In one embodiment, the platform may manage dynamic or runtime updation of plans and task allocation strategies on plurality of heterogeneous devices, for example heterogeneous autonomous mobile robots (AMR), like forklifts, AGVs, gripper, pick assist AMR, drones (104b, 104c...104n) etc. For simplicity, we are discussing further scenarios using AMRs, however, it is understood that any other kind of automated vehicle (e.g. self driving cars etc.) or mobile robots or an automated hardware device or an IoT or drones may be used. The system includes a plurality of heterogeneous AMRs 104b-104n, cloud 104a, a catalog store 101 that includes one or more plans and one or more task allocation strategies for deployment. The cloud maintains two-way communication with the plurality of autonomous mobile robots 104b-104n and the AMRs also communicate with each other through various messaging protocols. The system further comprises a plurality of plan execution engines 103a...103n that are executing on a plurality of AMRs and the cloud. These one or more plan execution engines collaboratively execute the deployed one or more plans and task allocation strategies at the plurality of AMRs 104b...104n based on the instructions received from DR module 102. The DR module 102 may act like a platform manager that coordinates the two-way communication between the execution engines, cloud, devices, catalog store, and the data store. The plan execution engines 103a...103n communicate with each other via various messaging protocols. The two-way communication channels 105a, 105b, 107a...107n, 108a...108n, and between plan execution engines 103a, 103b, 103c...103n (not shown for simplicity purposes) may be considered as one or more of the messaging protocols that would ensure fast and efficient communication between the components or modules of the platform. These messaging protocols are known to persons having ordinary skill in the art.

In one embodiment, consider a scenario where there are 3 AMRs (104b, 104c, 104d (not shown)) and one of them needs to be charged first. So, it all depends on how the plan 'charging' is configured. The DR module 102 analyzes the configuration to ensure that whether the plan execution engines 103b, 103c, and 103d (not shown) running on the AMRs 104b, 104c, and 104d respectively can decide amongst themselves, and if that is possible, then the plan execution engines takes the decision on its own (e.g. sending location information of the AMR), however, in some scenarios, the module 102 may decide that since the processing requires heavy computational load (e.g. warehouse map creation while navigating or route map analysis and generation) and hence, incurs heavy cost for the execution engines, in such scenarios, the decision is taken by the DR module 102 in collaboration with the plan execution engine 103a running on the cloud 104a or collaboratively between DR module 102 and one or more of execution engines 103a, 103b, 103c, 103d running on cloud 104a and the AMRs 104b, 104c, and 104d. The DR module 102 ensures seamless transition of functionalities between the plan execution engines for optimal performance.

In one embodiment, Agent Catalog 113 is a meta-repository of the heterogeneous robots 104b, 104c...014n that are supported by the platform 100 - e.g. forklifts, AGVs, PA-AMR, arms, drones etc. The meta-repository information includes specific details of the device e.g. device manufacturer, vendor, model information, dimensions (size, capabilities, payload that can be picked), hardware information, software information, associated firmware, piece of code etc. To explain the role of catalog store 101 and its components - Plan catalog 111, Task allocation catalog 112, and Agent catalog 113, let's consider an example of an AMR navigating in a warehouse. At runtime, the DR module 102, is monitoring events, both on the cloud device system and fleet of heterogeneous robots. While monitoring events, the DR module 102 gets notified that the platform or plan or task allocation strategy variables that are being tracked for robot 104b or for the system, have breached the threshold values (e.g. battery level below 10% of total battery) and also, performance values (number of picks (80 picks) of pick assist AMR is less than the predetermined criteria of 100picks/hr) is not within the threshold range of values. So, after being notified, the DR 102 module then has to identify an alternative navigating plan(s) and task allocation strategies from the set of navigation plans in the plan catalog 111. Consider the robot 104b is the assignee's robot 'Sootballs' which is a Pick assist AMR. So, the navigation plan executed by the plan execution engine 103b needs to be replaced with an alternative navigation plan from the plan catalog 111 and a separate set of task allocation strategies from the Task allocation catalog 112 may need to be switched. Now, consider there is an alternative navigation plan for the robot 104b which is of different robot type forklift. In one embodiment, since the alternative plan for the robot is of a different robot type than the one required for PA-AMR, the existing plan may or may not be replaced by the new plan because of different hardware configurations - for example, different drives, have different orientation constraints around the way they move around etc. So, the DR module102 has to analyze from the available options, the matching navigation plans that are compatible with the PA-AMR 104b. When the plan catalog 111 is initially populated with navigation plans, then the owner of the plan can describe the broad categories of robot that the navigation plan applies to or select categories of robot that are compatible with the navigation plan. For example, a navigation plan may be described as one that applies to differential drive robots or all tri-cycle controller types or similar to a car that can't rotate in place. This may be further discussed in detail in FIG. 1a and 1b.

In FIG. 1, the DR module 102 first searches in the plan catalog 111, task allocation catalog 112, and checks compatibility of the navigation plans in the plan catalog 111 and the task allocation strategies from the task allocation catalog 112 with the robot 104b. For simplicity, let's focus on the update of navigation plans from the plan catalog 111. Generally, there may be at least 100 navigation plans in the plan catalog 111, so, the DR module 102 may search in the plan catalog for the list of navigation plans and identify the alternative plan which is compatible with the given robot 104b. The compatibility check may be based on API compatibility, robot type compatibility, hardware or software compatibility etc. Then, for narrowing the search of the plan catalog and task allocation catalog, the DR module 102 checks the agent catalog 113 for broad categories or subset of categories where the specific robot 104b can be classified. This checking of agent catalog 113 can be considered as an additional filter for the DR module 102 to narrow down the search scope and identify the relevant navigation plan and/or task allocation strategies. Now, when DR module 102 pulls the new navigation plan from the plan catalog 111 and the plan has to be deployed on the robot 104b, the deployment has to be augmented by mapping or updating the plan variables of the existing navigation plan of robot 104b, for example, dimensions of the robot, minimum or maximum speed etc. with the plan variables of the new plan. The DR module 102 ensures that the data from the plan variables (e.g. dimensions, min & max. speed of the forklift) of the existing navigation plan may be retrieved from the catalog store 101 mapped to the plan variables of the new navigation plan that has to be deployed. So, the mapping of plan variables, retrieved from the catalogs available in the catalog store 101, happens every time, irrespective of whenever a plan or task allocation strategy is deployed first time or re-deployed later at run time.

In one embodiment, the DR module 102 continuously monitors events that may include monitoring or analyzing the platform variable, task allocation strategy variable, and/or plan variables, and on receiving a notification or a trigger, analyzes the notification to check whether the platform, task allocation strategy, and/or plan variables have breached their thresholds and hence, they may warrant updating one or more plans and/or if the notification is related to updating only one or more task allocation strategies deployed to at least one or more of cloud and the heterogeneous robots 103b...103n. The platform, task allocation strategy, and/or plan variables help the DR module 102 make a decision on whether the updates or mapping have to be made at a plan level and/or at a task allocation strategy level. This can also be understood from the schema representation of FIG. 1a and FIG. 1b.

In one embodiment, consider updations made at a plan level, let's consider a scenario where the plan may have N number of variables (static or transient type), for example, static variables may be minimum or maximum speed of robot 103b or dimensions of the robot 103b, size of the robot 103b, transient variables like how much distance is maintained by a robot 103b with other neighboring robots 103c..103n etc. Now, when the plan has to be deployed or instantiated, the value of the variables, say size of the robot, needs to be mapped from the agent catalog 113 to the variable of the new plan. So, before deploying the updated plans and task allocation strategies, the transient and/or static variables are mapped with new values of the identified plan and task allocation strategy.

In one embodiment, consider an example where transient capabilities of robot 103c may be added or removed. In this example, the analysis of notification may indicate that both plan as well as task allocation strategy needs to be updated for the robot 103c. For simplicity, we are considering one plan and one task allocation strategy as an example, however, the scope is not limited and includes updation of multiple plans and multiple task allocation strategies. For this, consider a scenario where the robot may navigate and acquire new capabilities post-deployment. The robot 103c may be an AGV which can rotate in-place, is a differential drive robot and can do a 360 degrees spin, navigate in any direction and perform the task of pick or drop as per the route plan. Now, while navigating to a particular zone in the warehouse, the AGV 103c may acquire a trolley or shuttle and hence, now, can't do a 360 degrees spin but instead, acquires a tri-cycle controller like new capability. Due to this new capability, the AGV 103c can now navigate like a car. Once the alignment of the AGV 103c to the trolley or shuttle is done, this alignment triggers a notification to the DR module 102 to generate customized solutions to handle the new acquired capabilities of the AGV 103c as discussed herein. The DR module 102 analyzes the notification and generates solutions as discussed herein. So, for this scenario, a different task allocation strategy may need to be enforced by the DR module 102. The navigation plan that was earlier implemented for the AGV 103c may need to be updated with a navigation plan having tasks corresponding to a tri-cycle controller capability. So, for route planning, earlier, the AGV 103c was tasked to navigate to a particular location and was able to do a 360 degrees spin and pick up. However, now, due to the change in scenario where the AGV 103c has aligned with a trolley or shuttle, the AGV 103c may not be able to do a 360 degrees spin and won't be able to travel in a reverse direction when the AGV 103c is behind the trolley. So, here the DR module 102 generates one or more solutions to solve the orientation constraint of AGV 103c and the post-processing of the route. In one embodiment, the DR module 102 collaborates with plan execution engines 103a, 103b...103n to generate solutions. The DR module 102 ensures that the existing navigation plan is updated and the new relevant task allocation strategy allocated to consider the runtime acquisition of capability by the AGV 103c. The DR module 102 may then update existing navigation plan with a new relevant navigation plan from the plan catalog 111 and new task allocation strategy that may be updated from task allocation catalog 112 related to route planning for the AGV 103c. The new updated plans and task allocation strategies enable the AGV 103c to continue performing the given set of tasks with new acquired capabilities. So, before deploying the updated plans and task allocation strategies, the transient and/or static variables are mapped with new values of the identified plan and task allocation strategy to reflect the new capabilities acquired by the AGV 103c. In one embodiment, this determination of whether mapping may be made at a plan level and/or a task allocation strategy level is made by the DR module 102 by analyzing the values of plan and task allocation strategy variables. Based on the values, the DR module 102 determines and maps the static and/or transient variables of the plan and task allocation strategy with new values to align the generated solution with the new acquired capability of AGV 103c.

In one embodiment, the plan and task allocation strategies may both need to be updated due to an addition of a new capability in a robot. For example, change in task allocation strategy and plan may be initiated by the DR module 102 based on the event related to addition of new capability in the robot. Earlier, the robot was able to pick up only 100 kg and now the robot, after acquiring the new capability of expanded functionality of trolley or shuttle, can now pick up around 200kg, and hence, may warrant a new set of tasks to be allocated. So, now the DR module 102 may have to analyze the plan and task allocation strategy for making the updates. Earlier, there was no distinction between capabilities of the robot as before acquisition, the general principle was all AGVs would be able to perform tasks related to pick and drop for only 100 kg. However, now the DR module 102 has to consider the runtime scenario where if there are tasks that require more than 100 kg, then, new tasks may be allocated since the AGV 103c has an expanded functionality as described herein.

So, post-deployment, in the earlier scenario, when the DR module 102 is notified that the AGV 103c has aligned with trolley or shuttle and acquired a new capability, this gives the DR module 102 an opportunity to raise the performance level of the system. After analyzing the notification, DR module 102 checks the platform, task allocation strategy and/or plan variables that indicates that both the plan and task allocations strategy for AGV 103c needs to be updated as discussed herein. The DR module 102 generates multiple solutions for identifying the relevant plans and tasks to be allocated for aligning with the new capability. After identifying the relevant plans and tasks to be allocated, the DR module 102 deploys them on the AGV 103c. The invention is not limited by this scenario of device capability as a factor for generating solutions to update the plan and/or task allocation strategy, but the scope is broad enough to consider other factors that may be encountered at runtime within an operating environment of the heterogeneous devices.

In one embodiment, the capabilities of the robot may be stored in Agent Catalog 113. The Agent Catalog 113 also includes robot specific code or firmware code. Consider the plan execution engine 103b running on robot 104b may report that the robot 104b's capability X has changed with Y. Now, this change is notified to the DR module 102. So, after receiving the notification, the DR module 102 initially verifies whether the existing plan and task allocation strategy can account for this change in capability Y. If they can account for the change in capability or is compatible with the capability Y, then no change is required. However, if the current plan and task allocation strategy is not compatible, then, the DR module checks whether the capability is parameterized for the task allocation strategy, which means whether the new values are mapped to the task allocation strategy, does it warrant a new plan. For e.g. whether a robot can pick or drop warrants the plan catalog to give the appropriate plan that has the pick and drop functionality or not. The DR module digs into the plan catalog and task allocation catalog and finds compatible plans and task allocation strategies that may be deployed. Also, in one embodiment, since the capability has changed, the DR module may refer to the Agent Catalog and pull a new firmware code (e.g. change in driving functionality of the robot) as the existing code may not be compatible with the change in capability of the robot 104b. The new firmware code may be compatible with the capability of the robot 104b. For e.g. the robot 104b may be an omni-directional robot and has a firmware and associated code for its current functionality related to how the robot is driven. The change in capability may lead to the robot 104b now having a tri-cycle controller drive functionality. Based on the new capability, the DR module may upgrade the firmware and/or software code with the new identified software code which is compatible with the new capability of the robot 104b. However, a change in capability may also not always need a firmware update, so, the DR module has to take the decision on when the change in capability may warrant a firmware upgrade, and consequently, a need to communicate with the Agent catalog.

In one embodiment, an exemplary non-limiting schema illustrating sample metadata of a task allocation strategy is provided:

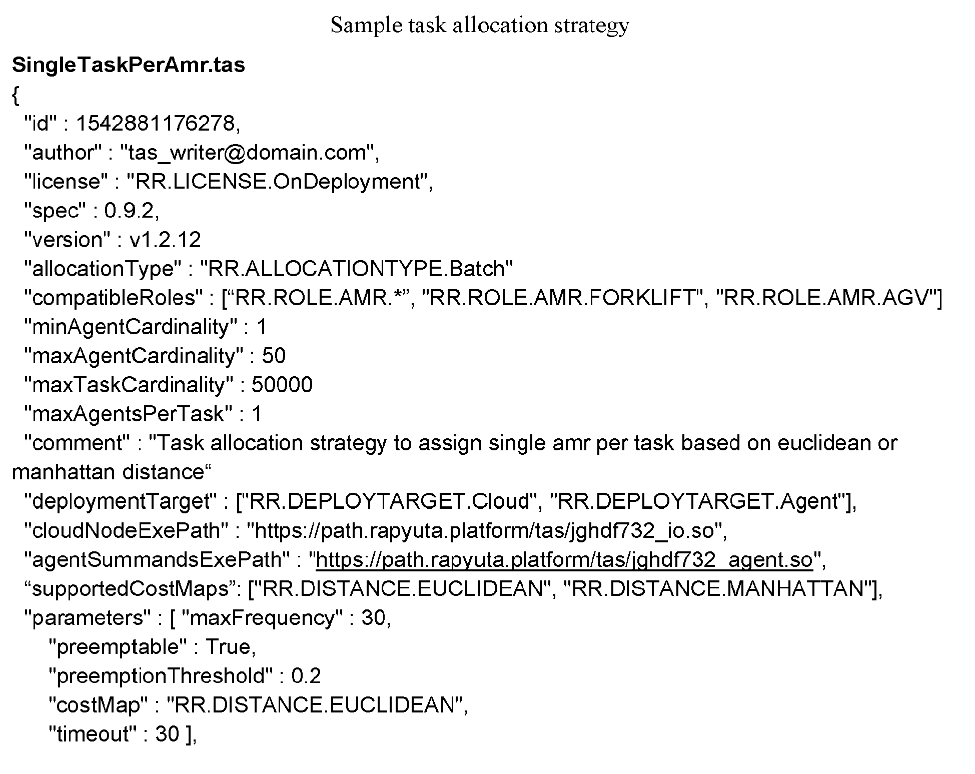

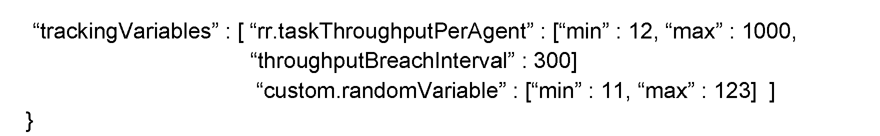

Some of the variables shown in the above schema are now discussed herein. It is understood that the count or names of these variables in the sample task allocation strategy may not be considered as limiting or specific as they can be customized and may be used with different names or values as per the operating requirement. The first variable 'id' indicates a unique identifier and 'author' may be the application owner or a developer. The next variable 'license' indicates the type of license for the specific task allocation strategy. The value 'RR.LICENSE.OnDeployment' indicates that the billing may be done based on the count of deployments of the task allocation strategy. The variable 'version' indicates the version of the specific task allocation strategy. One of the usages of this variable may be in compatibility checks before deploying or updating the existing task allocation strategy. The variable 'allocationType' indicates the type of task allocation done by the task allocation strategy. For e.g. the value "RR.ALLOCATIONTYPE.Batch" indicates that the allocation is batch type processing instead of per task processing. The next variable 'compatibleRoles' indicates the type of robots that are compatible with the task allocation strategy. So, the first value ["RR.ROLE.AMR.*"] indicates all AMRs are compatible, denoted by "*" symbol. Similarly, the other values "RR.ROLE.AMR.FORKLIFT", "RR.ROLE.AMR.AGV"] indicate forklift and AGV as the compatible robots respectively. The next variable 'minAgentCardinality' indicates the number of agents or robots that the task allocation strategy can handle which is of value 1 as shown. Similarly, the next variable, 'maxAgentCardinality': 50 indicates that task allocation strategy can handle maximum 50 robots. If there are more than 50 robots, then the task allocation calculation becomes a NP-hard problem and then it may not be feasible for the task allocation calculation to be solved using this approach. So, with the above value of 50, for a warehouse or an operating environment requiring more than 50 robots, this task allocation strategy may not be compatible when the DR module does a compatibility check and/or a comparison check with a default or predetermined criteria. The next variable "maxTaskCardinality": 50000 indicates the number of tasks that the task allocation strategy can handle. Here, the value is 50000 tasks that the strategy can handle. As a result of running the task allocation strategies with the above values of the variables, the next variable "maxAgentsPerTask": 1 indicates the number of agents (e.g. 1) per task being allocated. It is understood that the term 'agent' may be replaced by the term 'robot' or any other heterogeneous device, as discussed herein. The variable 'comment' includes generic comment for the specific task allocation strategy. The variable 'deploymentTarget' is of type 'list' and indicates the different type of devices on which the task allocation strategy can be deployed. In the said example, the value ["RR.DEPLOYTARGET.Cloud"] indicates that the task allocation strategy may be executed by the cloud device system and the DR module of the cloud device system may instruct the agents or robots to perform the results of executing the task allocation strategy. The value ["RR.DEPLOYTARGET.Agent"] means that this is a light weight task allocation strategy which can be executed on the robots and doesn't necessarily need the cloud device system for execution. When the value ["RR.DEPLOYTARGET.Cloud", "RR.DEPLOYTARGET.Agent"] is assigned, then, the task allocation strategy may be compatible with executing on cloud, robot, and both. For this value, the DR module takes the decision on whether the task allocation strategy may be executed on cloud, robot, or both. If the task allocation strategy has to be executed on the cloud node, the variable 'cloudNodeExePath' includes the URL of the source code of the task allocation strategy. If the task allocation strategy has to run on the robot, then the variable 'agentSummandsExePath' includes the URL of the respective source code of the task allocation strategy for running on the robot. Now, when the task allocation strategy has to be deployed, the DR module takes the decision on where the task allocation strategy has to be run. So, the source code at the URL has to be compatible with the cloud device system and/or the robot on which the task allocation strategy has to be executed. The next variable "supportedCostMaps" of the task allocation strategy indicates whether the distance calculation is based on EUCLIDEAN OR MANHATTAN distance. The variables discussed till now may be static variables and the next variable 'parameters' may be a dynamic variable which can be set as per the requirement. For example, the values in the 'parameters' variable indicate the default values or customized values that may be overridden while deploying the task allocation strategy. During deployment, the parameter variable 'preemptible' with value 'True' indicates whether the application wants the task to be preemptible or not. For example, if a robot is already assigned to a task and there is a better task allocation strategy available, should this robot be preempted or not. For value 'True', the robot may be preempted. The parameter variable ['preemptionThreshold': 0.2] indicates the threshold at which the robot may be preempted. This variable may ensure that the task allocation strategy does not keep on assigning new tasks by preempting the robots for a minor performance gain. The unit 0.2 indicates that there may be a resulting performance gain of at least 0.2 units for the preemption to happen. The remaining variables indicate the costMap and the timeout. The timeout indicates the units of time given for the task allocation strategy to do the optimal task allocation calculation.

In one embodiment, consider a scenario where the DR module comes into action related to the above task allocation strategy deployed on the fleet of heterogeneous AMRs. In the above example, the 'maxAgentCardinality' value is 50 and a new robot has been added at runtime to the current fleet of robots of size 50. Due to the addition of a new robot, an event is triggered which is a notification to the DR module indicating the addition of the new robot. The DR module analyzes the event or notification to find a breach in the threshold value as the count of robots in the fleet does not match with the 'maxAgentCardinality' value. The DR module may calculate that the number of agents per task ('maxAgentperTask' variable) may need to be increased to 2 or other variables may need to be updated. Since these are static variables, the **DR** module generates a solution to switch the task allocation strategy with a new task allocation strategy from the Task allocation catalog. The variable 'trackingVariables' allows variables that can be monitored by the DR module at the task allocation strategy level. Similarly, there are tracking variables in plans that allow the DR module to monitor the variables at the plan level. The first variable may be 'taskThroughputperAgent' which has a minimum value of 12 and maximum 1000. In one embodiment, this may indicate the number of tasks executed per hour with minimum being 12 and maximum being 1000. While deploying the task allocation strategy on a robot, these values can be updated as per the specification, role, and capability of the robot. When these values are breached, an event is generated that notifies the DR module to look out for alternatives. The next variable to be tracked may be "throughputBreachInterval": 300 which indicates how long it is fine to breach these values before the DR module looks out for alternatives. So, in one embodiment, if the variables to be tracked are consistently breached for 300 units of time, then, the DR module reacts to the event else there may not be a need for the DR module to take any steps for switching or replacement of the task allocation strategy. The next variable "custom.randomVariable" : ["min" : 11, "max" : 123] depicts that a developer or an application owner can define a random or customized variable as per their requirements in the task allocation strategy for tracking.

In one embodiment, the DR module may generate solutions based on the metadata or variables in the task allocation strategy. The actual collection of data related to the metadata or variables may be done by the plan execution engines running on the cloud and robots. for example, if the task allocation strategy is to be executed on a robot, then, the library or software code indicated at "agentSummandsExePath" variable may be deployed on the robot and the plan execution engine running on the robot may communicate with the library indicated in the variable "agentSummandsExePath." The library may be executed at the desired frequency and the plan execution engine relays the data for the variables back to the DR module.

In one embodiment, the variables that are being tracked at the task allocation strategy level may indicate that the performance of the system has dipped or the values are not close to the expected performance range. Consider the value of 'costMap' was "RR.DISTANCE.EUCLIDEAN" and based on this, the task allocation was being done. The one or more solutions generated by the DR module may be to choose a new task allocation strategy that may have the value of 'costMap' as "RR.DISTANCE.MANHATTAN" or other similar values. Here, if the task allocation strategy includes a list of multiple distance values, then the DR module may generate solutions that may include identifying the task allocation strategy based on historical performance of one of the values of 'costMap.' So, based on the generated solution, the DR module checks if the historical performance of any other task allocation strategy was better than the current performance, and if the task allocation strategy showed better performance, then the existing task allocation strategy may be updated. Similarly, the generated solutions may be based on various permutations and combinations of the values of the variables that can be considered for identifying a relevant task allocation strategy for updating and later deployment on the cloud and heterogeneous AMRs. The generated solutions may be repetitively analysed by the DR module till the required throughput or performance gain is achieved. Similar approach may be applied to generate solutions for updating both existing plans and task allocation strategies, as discussed herein.

In one embodiment, an exemplary non-limiting schema illustrating sample metadata of a plan is provided below:

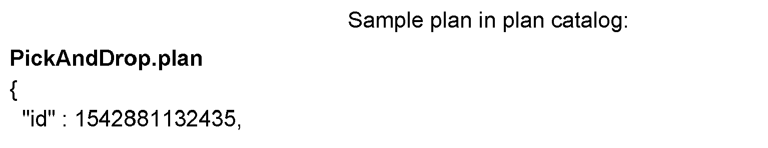

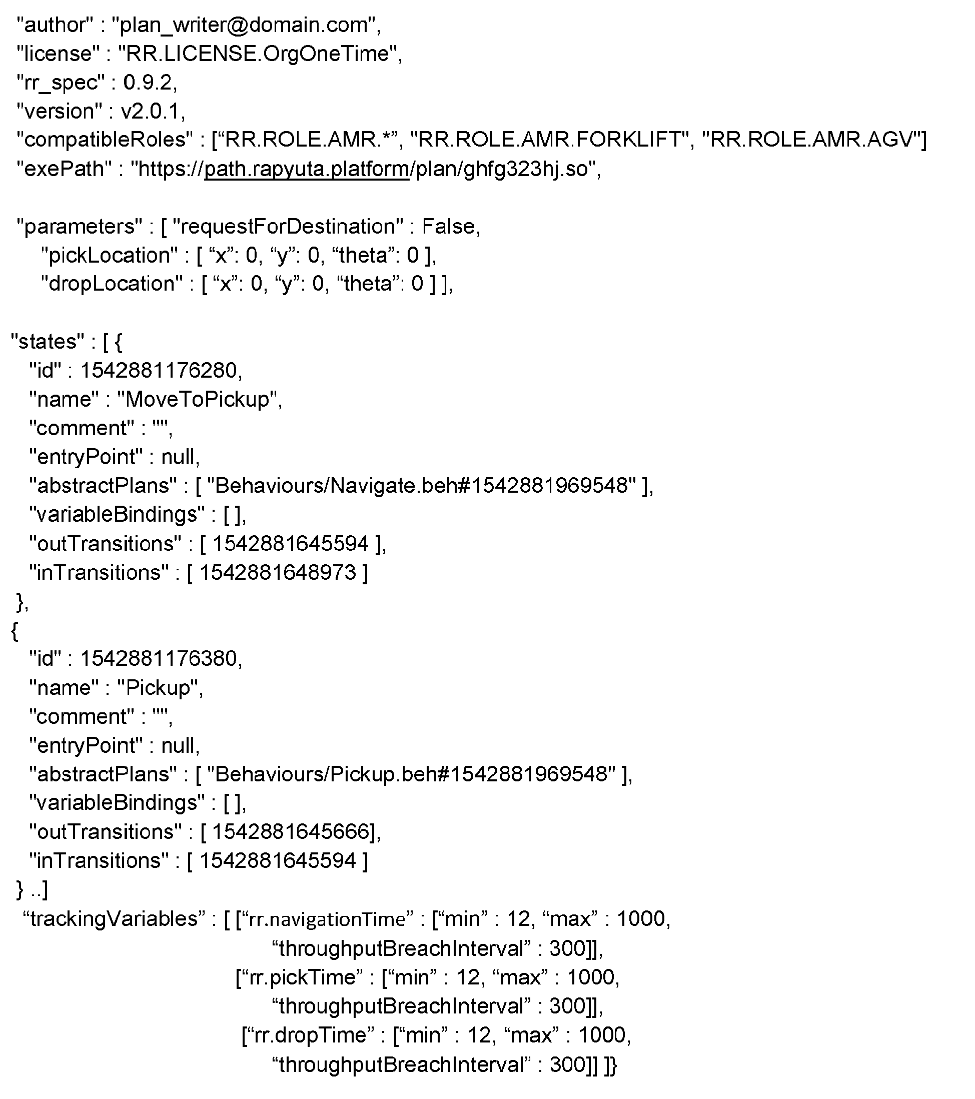

In one embodiment, the plan may be a 'PickAndDrop' plan. Some of the variables shown may now be discussed herein. It is understood that the count or names of these variables in the sample plan may not be considered as limiting or specific as they can be customized and may be used with different names or values as per the operating requirement. The plan has some variables that are similar in functionality to the task allocation catalog. For avoiding repeatability and for simplicity, sample variables are discussed however, the functionality of other variables may be similar or expanded as discussed for task allocation strategy unless mentioned otherwise herein. The 'PickAndDrop' plan may be executed by the AMRs while the AMRs are navigating around the working environment. The variables "id" : 1542881132435, "author" : "plan writer@domain.com", "license" : "RR.LICENSE.OrgOneTime", "rr_spec" : 0.9.2, "version" : v2.0.1, "compatibleRoles" : ["RR.ROLE.AMR.*", "RR.ROLE.AMR.FORKLIFT", "RR.ROLE.AMR.AGV"], "exePath" : "https://path.rapyuta.platform/plan/ghfg323hj.so" may be similar in functionality as discussed for task allocation strategy. The 'license' variable indicates that the billing may be a one time pricing for the said plan. When the plan is executed, the AMR looks for the data stored in the pick and drop locations variable. The parameter variable "requestForDestination": False indicates that the robot may not ask for a destination and may consider the destination as the one provided in the plan. The variable "requestForDestination" may be True when the drop location is not available and after the item is picked, the AMR may query for the destination or not take up items if the destination is not provided or may display errors. The next variable is the states which are there in the different stages of execution of the plan. The states may be 'MoveToPickup' or 'Pickup' with their variables like 'id', 'comment' etc. The source code indicated by the variable 'exePath' includes the checks for the transitions, behaviors etc. The next variable may be 'trackingVariables' which includes those variables that are tracked by the DR module at a plan level. So, the first variable to be tracked may be 'rr.navigationTime' that indicates the minimum and maximum time to move around in the working environment, like a warehouse. The other variables 'pickTime' and 'dropTime' provide the minimum and maximum time for picking and dropping an item respectively. For other examples, there may be variables like waiting in a queue for charging or for waiting for navigating to a destination after idling that may be tracked.

FIG. 2 is a block diagram illustrating a system 200 to dynamically manage updation of plans and task allocation strategies for a fleet of heterogeneous robots. In one embodiment, the system 200 includes a cloud device management system 202 that is a platform for deploying and executing software (e.g. plans) at cloud and different devices. The cloud device management system 202 is also used for managing devices, including robots. The cloud device management system 202 is a platform-as-a-service framework for cloud robotics solution providers. The cloud device management system 202 includes one or more processors for processing data received at the cloud device management system and from the devices in communication with the cloud device management system. For simplicity, only two robots, 214 and 216 are shown, however, the invention is not limited, and may include different combinations and types of devices.

The cloud device management system 202 also includes a sensor and execution data store 204. The sensor and execution data store 204 stores the execution data of a behaviour executed by the robots and the cloud device management. The sensor and execution data store also stores sensor data captured by the robots. Robot behaviour is a low level atomic activity executed by a robot under certain conditions within the state.

In one embodiment, the cloud device management system 202 also includes a user interface 206 that displays a plan. The cloud device management system 202 includes a catalog store 208 that stores several plans in the plan catalog (not shown). A user is displayed the different existing plans stored in the catalog store 208 at a user interface 206. The user can select one or more new sub-plans or plans from the catalog store 208 that the user wants to add to the robot execution plan. In one embodiment, the cloud device management system 202 checks compatibility of new plans and the current running robot execution plan. Based on the check, the cloud device management system 202 allows adding existing plans to the robot execution plan. This is similar to the steps which the platform proactively takes while adding or updating an existing plan to the plan execution engines.

In one embodiment, the selected existing plan may be converted into an executable code before it can be deployed at execution by the robots or at the cloud device management system. The robot plan execution system 202 includes a build engine 210 that converts the existing plans to an executable code. In order to convert the plans to the executable code, the build engine 210 injects a builder image code to the plans. Builder image may include various software components required for running a deployed instance of source code as well as software to aid detection of source characteristics (frameworks, languages etc). For example, builder images may include operating system libraries, language runtimes, middleware, and source-to-image tooling. When a builder image is executed, it injects the developer's source code into the builder image and produces a software executable image. Builder images are available for both cloud and device sides.

The cloud device management system 202 also includes a deployment and runtime (DR) module 212 that manages communication between the cloud device management system 202 and robots 214 and 216. In one embodiment, the DR module 212 includes a message broker 218 that receives sensor data and execution data from the robots 214 and 216. The robots 214 and 216 may include a communicator 220 and 222, respectively, which establishes a two-way communication with the message broker 218. The message broker 218 receives the sensor data and the execution result of new alternative plans and existing plans running on the robots 214 and 216. In one embodiment, the communicators 220 and 222 at the robots can also have a peer to peer communication with each other to share sensor data collected by the robots and execution result of executing the plan by the robots 214 and 216. The DR module 212 includes subcomponents like device manager 212, message broker 218, and build engine 210 in FIG. 2.

In one embodiment, when an existing plan and a task allocation strategy is selected then the cloud device management system 202 invokes a new plan execution engine 224 for executing the existing plan. In one embodiment, the cloud device management system 202 further deploys the new plan execution engine at the cloud device management system, or the robots. In one embodiment, the new plan execution engine is connected to the execution and sensor data store.

In one embodiment, the cloud device management system 202 and the autonomous mobile robots 214 and 216 includes a plan execution engines 224, and 226, 228, respectively. The robots 214 and 216 may be heterogeneous autonomous mobile robots working in a collaborative environment with the cloud device management system. Heterogeneous devices may include at least one or more of different device types or same device but different capabilities or having different software versions installed, or different operating systems (e.g. Robot operating system) versions, different hardware type, different manufacturer, or other possible combination of device types etc. The plan execution engines 224, 226, and 228 execute one of the plans and task allocation strategies depending on the plan and task allocation strategy deployed on the plan execution engine. A plan execution engine is a software module that includes logic to perform different operations required to control plan execution. For example, the plan execution engine stores the logic to determine assignment of tasks included in the plan to different autonomous robots, solves different constraint problems related to the plan, synchronize execution of the plan, etc. Each autonomous robot and the cloud device management system executes the plan execution engine for executing the plan.

The plan execution engines 224, 226, and 228 either alone or in collaboration with other plan execution engines execute the plan and task allocation strategy. In one embodiment, executing the plan includes managing the entire lifecycle of plan execution including determining several plan execution values. For example, executing the plan and task allocation strategy includes determining task allocation of different tasks within the plan to different autonomous robots. These plan execution values may be determined at different stages of plan execution as well as in real-time based on a change in the environment or robot's condition. For example, task allocation to robots may be determined at different stages of plan execution or in real time, when any of the autonomous robots assigned to a particular task breaks down and the task has to be reassigned to other robots that have not broken down and are capable to execute the task.

In one embodiment, the different plan execution values determined by the plan execution engines 224, 226, and 228 and the sensor data collected by the robots 214 and 216 is stored in the sensor and execution data store 204. In one embodiment, the cloud device management system 202 includes sensor and execution data store corresponding to robot execution plan. For example, the cloud device management system 202 includes a sensor and execution data store 204 and 230 corresponding to a robot execution plan. The sensor and execution data stores 204, 232, and 234 receives the plan execution values corresponding to the robot execution plan, from the plan execution engines 224, 226, and 228, respectively, executing at the cloud device management system 202 and the sensor and execution data from robots 214 and 216.

In one embodiment, the sensor and execution data store 204 and 230 communicate with each other to update the sensor and execution data at each other. In one embodiment, the robots 214 and 216 includes a local sensor and execution data stores 232 and 234, respectively. The local sensor and execution data stores 232 and 234 are updated with sensor data from robots 214 and 216 and execution data from plan execution engines 226 and 228, respectively. The data in the local sensor and execution data stores 232 and 234 are periodically synchronized with the sensor and execution data store 230.

As discussed, the sensor and execution data stores 204, 232, and 234 are updated with the execution result of executing the plan by the DR module 212 in collaboration with plan execution engines 224, 226, and 228 executing at the cloud device management system 202 or the robots 214 and 216. The DR module 212 uses connection to the sensor and execution data store 230 to retrieve the plan execution data and the sensor data from the sensor and execution data stores 232 and 234. The DR module 212 determines the status of the plan execution based on reading the plan execution data and the sensor data.

Reading the plan execution data and task allocation strategy allows the DR module 212 to determine when the new alternative plan and task allocation strategy may be executed by the plan execution engine 224 or other plan execution engines 226 and 228. The DR module 212 may push the new alternative plan or plans and task allocation strategy for execution after a particular condition is satisfied, a particular plan behaviour is executed, or any other plan execution result. For example, when a current plan is a "robot charging" plan and the new alternative plan is "software update". A "software update" plan may be defined to be executed when the "robot charging" plan enters a "charging" state of the "robot charging" plan. The DR module 212 determines when the sensor and execution data store is updated with a "docking" state from the plan execution engine executing the "robot charging" plan. Based on the determination, the DR module 212 updates the existing plan with the new alternative plan and the plan execution engine executes the new alternative "software update" plan.

In one embodiment, the plan execution engine 226 executing the "robot parking" plan may update the execution and sensor data store 232 with the current position of the robot 214, for example "waiting position", "parking position", etc. The data in the local sensor and execution stores 232 and 228 are synced with the sensor and execution data store 230 in the cloud device management system 202. The DR module 212 continuously monitors the platform variables, say position, and when there is a change in current position of the robot 214, retrieved from the execution and sensor data store 230, the DR module 212 is notified of the change. On notification about the change, the DR module 212 analyses the platform variables and identifies a solution that includes a verifying if the current position of the robot is 'parking' position. If the robot position has changed to a 'parking' position, the DR module 214, as part of the solution, pushes a "software update" behaviour plan to initiate a software update operation on the robot 214 and the task is updated to 'software update task'.

In one embodiment, the cloud device system 202 includes a popularity module 240 The DR module communicates with popularity module 240 and enables users to become popular or receive increased licensing fees based on at least one or more of popularity of their imported proprietary plans, usage by the community, review comments, user friendliness of the software code, plans, task allocation strategies, multiple core features, review scores etc.

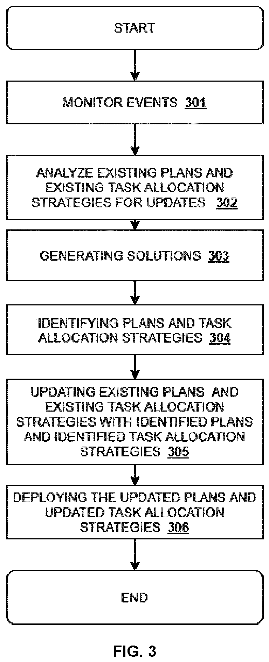

FIG. 3 is an exemplary and non-limiting flow diagram illustrating a process to deploy updated plans and task allocation strategy for execution, according to an embodiment. Initially, the developer or the user imports a plan or uses a user interface to define a plan. The system may receive a request to deploy one or more plans from the catalog store. The plan includes tasks depending on the scenarios where the device (e.g. AMR) is being installed. e.g. in an autonomous warehouse, typical tasks may be related to navigation like LiDAR navigation, Vision based navigation, picking and dropping inventory items, sorting, gripping objects etc. After the request is received, the platform deploys the plans and task allocation strategy to be executed on the fleet of AMRs. The existing plans are then executed on one or more of the cloud device systems and the AMR.

Post-deployment, the set of AMRs go on executing the assigned tasks - for example-pick and drop, sorting, gripping, following humans, bringing goods to person, etc. As described herein, the platform may adapt the operational capabilities of the plurality of heterogeneous devices through reconfigurable plans and task allocation strategies. In a warehouse kind of environment, there are a number of scenarios where the AMR may need guidance or support from the platform. So, the DR module of the platform continuously monitors various events related to the platform or plan or task allocation strategy variables which includes values indicating performance or functioning of the fleet of AMRs that are registered to the platform (301). A notification or triggering for action may happen either via events originating from the AMRs itself or internally by the platform. This notification may be in the form of a signal or message from the plan execution engines running on the AMR to the DR module. The notification may be related to one or more plans and task allocation strategies that are deployed on one of the cloud and/or AMRs. If the notification is sent to the DR module, then, the notification identifies the specific plans (e.g. charging and/or navigation plans) and task allocation strategies. In one embodiment, the DR module triggers or notifies based on collaborative steps taken by the plan execution engines running on the cloud node and/or the plan execution engines running on the AMRs. Further, the DR module notifies or triggers based on events happening on the AMRs and the information collected from the plans itself. In one embodiment, the notification or trigger may be initiated for multiple scenarios - e.g. the robot may acquire new capabilities or may support a new behavior to perform particular tasks, e.g. AGV gets a robot arm capability and hence can navigate around differently, so, a trigger may be received by the DR module indicating that there is a need for the capability of the AGV to be enhanced. The DR module analyzes existing plans and existing task allocation strategies for updates. Based on analysis of the notification, the DR module identifies one or more solutions as discussed herein. As part of the solutioning, the DR module retrieves a suitable plan and task allocation strategy for arm capability from the plan catalog and deploys them as described herein. In addition, the DR module allocates a new set of tasks from the new plans and task allocation strategies onto the heterogeneous robots. In another embodiment, the notification may also be raised because of a different type of device joining the fleet of devices. For example, a 'Goods to person' robot may join the fleet of devices, which may then trigger a notification to the DR module to identify solutions to deal with this new device joining the fleet of devices. The solutions are identified dynamically based on the scenarios and there are various examples discussed herein on various solutions that are generated by the DR module. Based on the generated solutions, the DR module identifies the relevant one or more plans and task allocation strategies for deploying as discussed herein (304). The relevant plans and task allocation strategies may align with or support the new robot behavior. These examples are not limiting and any potential scenario that may lead to switching or updating of plans and task allocation strategies are encompassed within the scope of the invention. Such scenarios may trigger or use alternative mechanisms to enable the platform to take decisions and switch the plans and task allocation strategies as per the dynamic requirements.

After receiving the notification either from a specific AMR or multiple AMRs or internally, while proactively monitoring events related to the fleet of AMRs, the DR module analyzes the notified plans and task allocation strategies for one or more platform, task allocation strategy, and plan variables (e.g. waiting time of robot, system downtime, agent's CPU consumption time on the AMRs etc.) that need to be tracked (302). So, in such scenarios, one of the embodiments includes to analyze the catalog store to identify alternative or more relevant plans and task allocation strategy based on one of the variables, as discussed herein. For e.g. one of the plan variable variables may be 'system performance'. The plan variables that may be monitored or tracked for the particular plan may then be defined in a generic way, for e.g. system downtime. The plan variables may be customized or defined as : a) How much time does the robot spend waiting at an intersection so that other robots (similar robot type or other types) can pass? b) How much time does the robot actually wait in a queue before going to the charging station? The states or behaviours are then tagged or marked for analysing performance in a plan. After the relevant plans and task allocation strategies are identified, the existing plans and existing task allocation strategies are updated with relevant plans and task allocation strategies (305).

In another embodiment, the DR module generates solutions that are related to extracting alternative better plans and better task allocation strategies via multiple factors, for example considering historical data. These solutions are generated based on the analysis of the events that may include a notification. Consider a scenario, where there may be a plan for charging that includes tasks, like "Go and queue at the charging station for a certain time (e.g. 3 seconds) and dock for charging for a certain time " In this plan, queueing time is a time wherein the forklift/AGVs/AMR or set of AMRs are waiting to get to the charging slot for docking. So, in this scenario, the platform may be influenced or plans can be reconfigured to make a decision to go and charge based on the platform variable - "% level of battery." So, in a generic way, the platform, or specifically the DR module, tracks the platform variable "system downtime" and one of the generated solutions may be related to the scenario, when the battery level falls below a predetermined threshold- say 65% level of battery , then the existing plans can be replaced by new plans and existing task allocation strategies by new task allocation strategies to enforce the robots to go and queue for charging for a certain period of time and then, later dock for charging for certain period of time. Once the plans and task allocation strategies are replaced or updated, the platform deploys the updated plans and task allocation strategies on cloud device systems and/or plurality of AMRs (306).

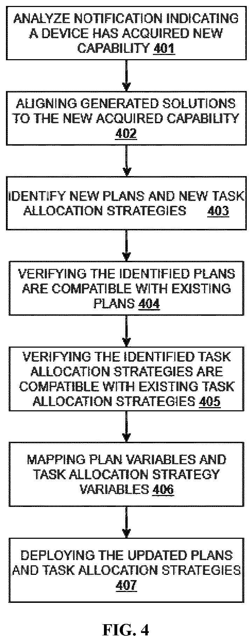

FIG. 4 is an exemplary flow diagram illustrating process steps for updating plan and task allocation strategy for an autonomous mobile device, according to an embodiment. In one embodiment, in the Agent catalog, variables for a robot can be updated to denote the current status. For example, a specific AGV may have a value of 100 kg for the variable 'Max load factor.' Once the AGV connects with trolley or shuttle, then, the capability increases and the value of the variable 'Max load factor' increases to the new overall weight, for example 200kg. Due to this connection between AGV and trolley or shuttle, two changes have reflected in the system a) the capability of AGV to rotate in-place or an omni-directional robot may have been replaced by a uni-directional robot that can drive in a tri-cycle drive controller way and b) the AGV can handle double its earlier capacity to pick and drop. The robot reports the changes to the plan execution engines, which in turn notifies the DR module saying that these are the new capabilities acquired by the robot (401). So, the notification is a trigger for the DR module to generate solutions that are aligned to the new capabilities that lead to updation of one or more plans and one or more task allocation strategies for these new capabilities (402). The DR module may generate additional solutions for aligning with the new acquired capabilities as discussed herein:
a) the plan and the role of the robot may be replaced, for e.g. assignee's PA-AMR robot, 'Sootballs" acquires an 'Arm' capability and now, has a new role. The DR module searches the plan catalog and the task allocation strategy catalog for new plans and new task allocation strategies (403). The identified plans and task allocation strategies need to be first verified for compatibility check. This compatibility check can be considered a proactive measure by the platform to ensure the accurate plans and task allocation strategy are deployed on the robot. The compatibility check may include at least one or more of API, robot type, robot capability, robot behavior, hardware, software compatibility checks etc. (404) The replacement in plan is notified to the entire fleet of robots by the DR module.
b) The task allocation strategies may be replaced to indicate that the strategies deployed in the warehouse need to account for the extra capabilities acquired by one or more of the robots from the fleet of robots. This is described in further detail: When the robot acquires a capability, the robot or at a higher level, the plan execution engine running on the robot first notifies the DR module. The DR module then looks into the plan catalog and task allocation catalogs, pulls in the relevant task allocation strategies and the relevant plan. After verifying the relevant plans and task allocation strategies by compatibility check, these plans and task allocation strategies can be updated (405). Now, let's focus on task allocation strategy and understand how the DR module performs the update of the task allocation strategy. Initially, the task allocation strategy indicates that the max load bearing capacity of all the robots in the warehouse is defined as 100kg. If the platform receives a task where the task payload capacity is 180kg, then, the DR module rejects the task indicating that the capability does not exist as of now, and hence, the task cannot be executed. However, later, once the robot is aligned with a trolley or shuttle, the DR module, during its event monitoring process, identifies the robot that can take 180 kg load. So, the capability to handle task payload of 180kg is now available, the DR module pulls the relevant task allocation strategy from the task allocation catalog to execute the task having a task payload of 180kg. In certain situations, instead of pulling the entire task allocation strategy and replacing the current task allocation strategy, for efficiency purposes, the DR module may only need to map the variable max load factor to 180kg for the specific robot to ensure that the new task with higher payload is executed. The entire fleet of robots is then notified of this event. In other scenarios, the plan variables and task allocation strategy variables are mapped with the new values, for example max load factor is now increased from 100kg to 180kg to ensure that the new task with higher payload is executed (406). The updated plans and task allocation strategies are now ready to be deployed on the cloud and/or heterogeneous AMRs. In this scenario, the DR module deploys the updated plan and task allocation strategies on the robot connected to the trolley (407). So, for collaborative function of the workload, the DR module notifies all the robots that earlier tasks having payload more than 180kg were rejected, however, with the new expanded capability, there is no need to reject heavier tasks. So, the robot aligned with the trolley or shuttle gets a higher weightage or priority to perform the higher load task. Now, consider another robot that also acquires a trolley or shuttle. This scenario showcases the robustness and efficiency of the platform. As the entire system is aware that the fleet of robots has an expanded payload capacity, so, there is no need for the DR module to either map the variable to indicate the higher capacity or pull a new task allocation strategy to update the second robot's new acquisition of additional capability. The DR module just has to maintain that two robots from the fleet of robots have the additional capacity. So, when there are multiple new heavy tasks, the two robots may be given the higher weightage to perform the tasks.
c) Now, consider a plan currently being deployed that is able to deal only with AGV type of robots. While monitoring the events happening on the system, the DR module detects that a robot of forklift type has joined the fleet and the system has no idea of how to collaborate with the new robot. The reason being that the plans that are deployed on the fleet of robots can account only for robots of type AGV as it is the default supported role and does not include any role for forklifts. In this case, the current plan and task allocation strategy that is deployed before the forklifts come into the picture may be as follows: The AGV goes below the palette, picks up, goes to the destination and drops. The task allocation strategy, in this case, had only one robot (AGV) to be assigned per item for the tasks related to palettes movement, pick up and drop. However, with one or more forklifts joining the fleet, the task allocation strategy and the plan needs to be updated to ensure that the forklift and AGV work collaboratively. The plan and task allocation strategy may be updated so that the forklift and AGV may be assigned the task as follows - the forklift may pick up and drop the item on the AGV, the AGV may then navigate to the destination, and at the destination, another forklift may be assigned that reaches the destination and helps the AGV to offload the item. In the first scenario, the AGV has to go below the palette and pick it up, however, in the second scenario, the AGV has to be close to the forklift, within a certain radius, and the forklift may do the heavy lifting and help the AGV in offloading the items.
d) In a hybrid kind of scenario, some of the robots lose the capability to do pick and drop while other robots have the capability to perform pick and drop. Consider that earlier AGV was able to do pick and drop, however, due to some malfunction, the AGV has lost the capability to do pick and drop. If forklifts are also part of the fleet of robots, then, the DR module may enforce that the remaining robots collaborate with the forklifts and use the minimal capability available to perform the tasks in the warehouse without any dip in performance. So, at a high level, let's consider how the plans and the task allocation strategies get updated. At the beginning, the platform assigns tasks to each robot. Once the robots are assigned the task, the DR module identifies the appropriate plan. This plan outlines the different states and behavior that the robot needs to go through during the lifecycle of the plan execution. Once the DR module receives a trigger or notification of certain events, then, the plans and task allocation strategies may need to be updated. The trigger indicates the roles or capabilities of the robots and how the capabilities of a robot has been added or removed. So, the capabilities that may have been expanded or reduced by adding or removing may be, for example - an AGV may have the capability of detecting barcodes or not, able to navigate using SLAM navigation or magnetic strip navigation, forklift can have capability of pick, drop, and palette movement. So, in one embodiment, robots can be considered as a device having a set of capabilities. Whenever there is an event related to addition or removal of those capabilities, this event triggers a notification to the DR module. The DR module then analyses the notification and generates solutions verifying whether the current plans and task allocation strategies account for the new addition of capability or new addition of robot. If the verification results in the negative, then, the DR module searches the catalog store, for the appropriate plans and task allocation strategies. These new plans and task allocation strategies are then deployed across the cloud and heterogeneous fleet of autonomous mobile robots.

In one embodiment, both plan and task allocation strategy are independent of each other. Sometimes, a plan may be good based on past historical usage of the plan and similarly, there may be a task allocation strategy that might have worked well in the past, however, if they are not compatible with each other to be implemented in a particular scenario, then, the DR module may take a decision that probably, the current existing task allocation strategy and plan are best suited for executing in the current situation and hence, no change is required. In such scenarios, the DR module may abort the updation or replacement of new plans and task allocation strategies as discussed herein.

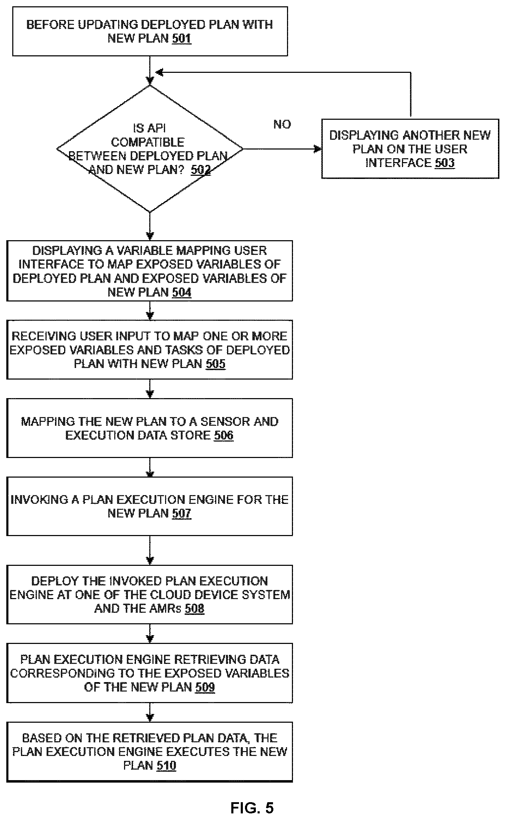

FIG. 5 is an exemplary flow diagram illustrating process steps for updating the plan, according to an embodiment. For readability and for simplicity purpose, process flow for plan has been considered, however, the process flow is applicable for task allocation strategy as well. It is understood that the invention is not limited to determining only API compatibility as other factors can also be considered for determining the compatibility, for example robot type, robot behavior, robot role, robot capability, robot hardware, robot software, operating environment factors, other factors discussed herein, etc. So, in the discussion, API compatibility may be replaced by factors as discussed herein. For simplicity, only one plan is discussed, however, the invention is not limited to comparison of one plan but the scope includes multiple plans as well. A similar approach may be applicable for a task allocation strategy for compatibility check. In one embodiment, consider the process steps before updating the deployed plans with the new plan (501), the platform or DR module may perform a check or verification to determine API compatibility between the deployed plan and the new plan (502). In one embodiment, determining API compatibility includes determining whether the software version of the deployed plan API matches with the software version of the new plan API. In one embodiment, the cloud device management system also includes a check to match code versions of the deployed plan and new plan. In case a determination is made that the API of the deployed plan and the new plan do not match (condition in 502 is NO) then the cloud device management system displays an alternative plan on the user interface (503). The alternative plan suggested may be based on the solutions discussed or those that may be covered within the scope of this invention. This step may be manual where user input may be required or may be automated where the platform makes an automatic decision based on the various scenarios envisioned within the broader scope of the invention.

Next, in case the new plan and the existing plan have API compatibility (condition in 502 is true) then a variable mapping user interface is displayed to map the exposed variables and tasks of the new plan and the exposed variables and tasks of the deployed plan (504). A user input is received to map one or more exposed variables and tasks of the new plan and the deployed plan (505). The exposed variable names are mapped in order to allow the plan execution engine executing the deployed plan to retrieve variable values of the robot execution plan corresponding to the exposed variable of the new plan. For example, a deployed plan may have an exposed variable "speed" and a new plan may have an exposed variable "velocity". At the variable mapping user interface, the exposed variable "speed" is mapped to the exposed variable "velocity". The plan execution engine executing the deployed plan updates the "speed" value at the sensor and execution data store (507). The new plan execution engine retrieves the value for the "speed" parameter and assigns it to the "velocity" variable of the new plan. Similarly, a "forklift task" of a deployed plan and a "vehicle task" of the new plan is mapped.

Next the new plan is mapped to the sensor and execution data store (506). A plan execution engine is then invoked for executing the deployed plan (507). The new plan execution engine is deployed at one of the cloud device management systems and the autonomous mobile robots (508). In one embodiment, the new plan execution engine is deployed at one of the cloud device management systems and the autonomous robot based on the definition of the plan.

In one embodiment, the plan execution engine executing the existing plan retrieves the data corresponding to the exposed variables of the new plan (509). In one embodiment, the plan execution engine executing the deployed plan retrieves the data corresponding to the exposed variables of the new plan based on the mapping of the deployed plan and the new plan. Finally, based on the retrieved plan data, the plan execution engine executes the new plan (510). The result of executing the new plan is updated with the sensor and execution data store.

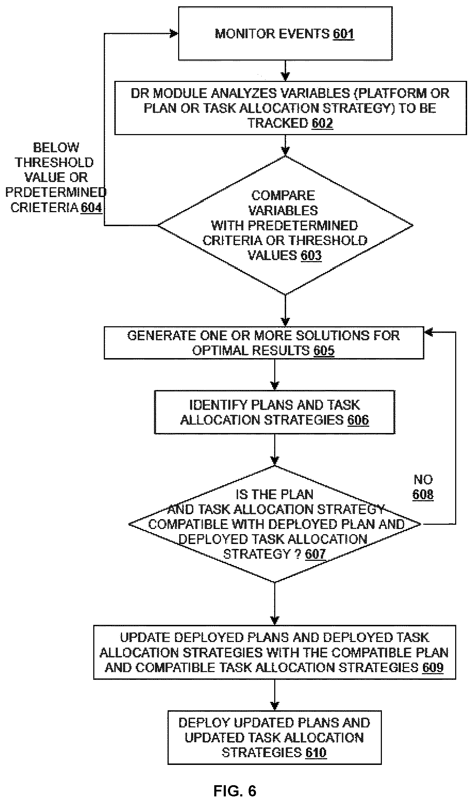

FIG. 6 is an exemplary flow diagram illustrating process steps for updating plans and task allocation strategies, according to an embodiment. In one embodiment, DR module monitors events happening at the platform level and at the robot level as discussed herein (601). The DR module analyzes and keeps track of the values of all variables of platform, plan, and task allocation strategy that may be tracked (602). These values that are to be tracked may be compared with the predetermined criteria provided at design time or in the plan, and task allocation strategy itself. The predetermined criteria can be customized or defined as per the various factors, for example based on throughput expected in the warehouse, say 100 picks per hour by a Pick assist robot. The variables may also be compared with threshold values that may be set based on various factors as discussed herein (603). After comparison between one of the analysed platform variables, task allocation strategy and/or plan variables and a predetermined criteria or pre-defined threshold values, the platform may continue monitoring events or ignore the notification if the variables have values higher than the threshold value or the predetermined criteria (604). However, in case the values fall below the threshold value or predetermined criteria, the platform may generate one or more solutions based on better alternatives (605), like analyzing historical data to identify better alternative plans and task allocation strategies. The solution may be to identify successful, popular, or efficient plans and/or task allocation strategies that have successfully worked in the past for the given instance (606). The next step for the DR module may be to verify whether the better alternative plans and task allocation strategies are compatible with the deployed plans and task allocation strategies on the cloud and/or plurality of heterogeneous devices (607). The compatibility check is done using multiple implementations as discussed herein. In case the plans and/or task allocation strategies are not compatible or are a mismatch, then, the DR module goes back to generating additional solutions for identifying the next best set of plans and task allocation strategies (608). In case the compatibility check returns positive, then the deployed plans and deployed task allocation strategies may be updated with the better alternative plans and task allocation strategies (609). The updated plans and task allocation strategies are then deployed on at least cloud and/or plurality of heterogeneous autonomous mobile devices (610).

In one embodiment, consider a scenario where the decision to be taken is for slot management or queueing the robot for charging purposes. The platform may generate a solution focusing on historical data. The DR module may retrieve one or more plans and one or more task allocation strategies that gives efficient results and also may ensure the task was successfully executed. In one embodiment, the generated solution may include narrowing the search scope of historical data to one or more factors, for example a device or at a warehouse level, for e.g. in the past, in a specific client warehouse, where there were wireless connectivity challenges or lighting issues while navigating, a specific navigation plan and/or task allocation strategy may have executed successfully with limited downtime, so, the same navigation plan and task allocation strategy may be retrieved again as part of the new solution.

In one embodiment, the platform exhibits high availability of plans and task allocation strategies for robots of different types. Consider a scenario where the designer of a navigation plan says that the plan is specifically valid for a product say- forklift of the assignee, Rapyuta Robotics, having differential drives or other equivalent drives. So, this kind of information is very specific and not generic. However, in such scenarios, the platform provides additional information, for example to the user, in the form of those plans that may be compatible and can be used for replacing the original plans. For example, the platform may recommend another navigation plan for forklift of another company X having a specific dimension. So, in such scenarios, the new navigation plan may be defined in such a way that the new navigation plan is compatible with the old plan and can replace the old navigation plan even if there is mismatch of certain plan variables. This same strategy may be applied by the platform while identifying replacement for existing plans and updating task allocation strategies on the fleet of heterogeneous AMRs.

In one embodiment, after comparison between at least one or more of platform variables, plan variables, task allocation strategy variables and predetermined criteria or defined threshold values (e.g. battery level below 10% of overall battery level of the robot, navigation time within a min and max range, pick time and drop time within a min and max range etc.), the platform may generate solutions based on better alternatives, say for example task allocation strategies, related to either tasks allocated or to be allocated for the device. For example, there may be two tasks - 'sit idle' and 'process an order.' So, according to the task allocation strategy, the robot may have to either work to process the order or sit idle. Now, assume there are 2 forklifts in a warehouse and 2 orders are to be announced. If the two forklifts are at equal distance, then, for optimal performance, the solution that may be applied may consider the forklift having higher battery level to process the order. So, here the solution includes a higher affinity factor towards that robot that has a higher battery level to perform the task of processing the order. So, accordingly, the relevant one or more plans and task allocation strategies may be deployed and related tasks may be allocated considering the affinity factor. In a different scenario, if the battery level of another robot is below the predetermined criteria or threshold value, then the DR module may consider that to avoid wear and tear, and to increase the life of the device, it may be optimal if the task allocation strategy 'sit idle' is executed for the robot.

In one embodiment, consider the above tasks to include processing the order for a particular area within a warehouse. The warehouse may include an area of multi-floor layout or a narrow section of a warehouse where only a particular type of forklift, say slimmer, can process the order in a narrow design and limited work area. So, here, the solution generated by the DR module may include an additional factor of identifying the appropriate plans and task allocation strategies depending on the type of robot that can work in a difficult environment which may have a peculiar work design that limits the functioning of general types of robots. The platform identifies the relevant plans and task allocation strategies customized to resolve environmental, operating environmental issues etc. as discussed herein.

In one of the embodiments, the platform provides an overriding option that allows the users or developers or third parties to define the variables in the platform or plans or strategies to be tracked with the threshold or baseline platform variables. In one embodiment, the developer or the user can state that the platform variable to be tracked may be the device performance while running on the specific or set of AMRs, time spent during the waiting period or device's CPU consumption when the device is in a particular stage (e.g. tracking an object in the environment) or how many times the plan execution engine running on the robot visited a particular state (e.g. picking, staying idle etc.) The platform variables can also be customized, for example, one of the platform variables that the user may want to track may be utilization, system downtime, CPU consumption etc. Similar activity can also be done for the plan or task allocation strategy variables that may be tracked.

In one embodiment, the plans are intelligent, reconfigurable, and have the capability to make the set of AMRs behave in a manner so that they can be implemented as per the required task. For example, consider a plan for charging an AMR. After the plans and relevant task allocation strategies are deployed on AMRs, the DR module may be triggered or notified for events relating to a specific problem on an AMR or set of AMRs whose battery level is falling below the predetermined threshold, say 60% of battery life. The platform always has a global view of the entire fleet of AMRs and hence, the platform makes decisions dynamically on whether a specific or set of AMRs need to go for charging. The platform generates multiple solutions that may be applied to ensure high performance and efficiency, for prioritizing the robots based on type of robot e.g. robots can wait in a queue instead of immediately moving for charging or another solution may be specific set of robots of particular type (e.g. forklift) may initially go first for queueing and secondly, the next set of robot (e.g. AGV), and later the remaining set of robots. The other solutions that may be generated may be related to the ordering of robots based on the priority of inventory order (e.g. same day order) or grouping of inventory orders based on the type of robots that can execute the specific group or similarity of inventory orders, capability of robot, for example having additional weight picking capability than others in the fleet etc. This solution related to ordering or prioritizing can change as per the order fulfillment criteria given by the warehouse owner or robotics solution providers or may also be driven by the inventory order itself. Based on the solutions finalized by the platform, an alternative or set of alternative plans and one or more task allocation strategies are applied to replace the current plan or set of plans to ensure the specific AMR or set of AMRs may go for charging. Similarly, the set of tasks that need to be allocated are identified from the new set of plans and then allocated on the fleet of AMRs. The platform may consider additional factors like inventory order priority that the robot is handling, robots that process high priority order to be charged first, congestion or obstacle avoidance, coordination with other robots in the team or fleet etc. The invention is not limited to these embodiments and the scope is broad to include other scenarios that enable the platform to identify relevant solutions for updating one or more plans and task allocation strategies for getting the required optimal results.

In other embodiments, consider a user case scenario wherein a platform variable 'system downtime' may be tracked for a charging plan. The platform has to take a decision in this context on which robot may go and charge first. Initially, the user defines the overall time involved in the charging process as a platform variable to be tracked. This may also be a performance variable to be measured that indicates the overall time of a specific AMR or set of AMRs spending in charging that may translate to system downtime. For a system administrator or a project manager or warehouse owner, the platform gives a global view of the entire fleet of AMRs and statistics of 'charging' in the entire warehouse or an automotive self driving car for an entire route of driving for example. This translates into information related to 'system downtime' for the 'charging' plan.

In one of the embodiments, the solutions generated by the DR module for switching plans, task allocation strategy, and for decision making may also be determined on the basis of different roles of a robot. For a navigation plan of a particular robot, say forklift, there may be only one role. However, for a robot like Turtlesim, there may be two roles - leader and a follower. Consider a scenario where the platform may generate a solution, as discussed above, to identify alternative one or more plans as a replacement for an existing plan. In such a scenario, the platform may apply a general task allocation strategy of mapping the new navigation plan of a robot to a forklift. Now, let's consider a subplan having a leader and a follower role, while the main plan may be having a fat turtle and a lean turtle role. So, for a fat turtle role, when the platform identifies the subplan as an alternative plan for replacing the existing plan, then, the strategy may involve giving higher priority to a subplan that has a higher affinity factor towards a role of a leader and lower affinity factor towards the follower role. In contrast, for a lean turtle, when the platform identifies the subplan as an alternative plan, then, the strategy may involve considering the subplan that has a higher affinity factor towards the role of follower than towards a leader role. So, accordingly, the relevant one or more plans and task allocation strategies may be deployed and related tasks may be allocated. This kind of decision making makes the platform robust and versatile based on the role mapping and task mapping done by the platform at different levels.

In one embodiment, the platform, being robust and also flexible, allows users to be more creative and define plan, task allocation strategy as per the requirements. For e.g. consider a plan and the users may like to track plan variables focussing on time spent on tasks like waiting for a route, time spent for actual navigation, count of total distances travelled, count of times navigation was done, number of times path was deviated - maximum deviation, minimum deviation, number of times robot had to rotate. These are examples of some plan or task allocation strategy variables that developers may want to track specific to a plan, for example a navigation plan. While adding plans and/or task allocation strategy to the catalog store, the users can specify the variables that they may like the platform to track, as discussed herein.

In one of the embodiments of the invention, after the user specifies the platform variables, the platform may need the developer to enable the feature of dynamically deciding new plans to replace the older one. Based on predetermined criteria, the platform may notify the developer to give her consent that she wants the new plans to dynamically replace the older one. For example, while navigating in a warehouse, there may be a scenario where the platform may generate a solution to proactively take action (e.g. risk mitigation step for charging a battery of the robot before it dies down or crosses a predefined threshold level.) or as per the approval from user, tracks the platform variable to find alternative or relevant plans for replacement once the threshold is breached.

In one embodiment, consider additional solutions that may be generated by DR modules for replacing existing plans with alternative plans for a robot with different behaviors. The DR module may verify the new alternative plans and task allocation strategies on whether the new alternative plans and task allocation strategies support or align with the new role or behavior or capability of the robot. The platform may identify alternative plans (e.g. navigation) to replace the existing plans in the AMRs. The plan variable values which are there in the existing plans need to be updated by the plan variables of the new plan and on the basis of the type of AMR on which the new plan has to be deployed. e.g. for a navigation plan, one of the plan variables that needs to be updated may be dimensions of the AMR. This information has to be dynamically mapped when the actual plan is deployed. So, when a navigation plan for a forklift is deployed, the platform has to ensure the appropriate mapping of the plan with the compatible product type from the catalog store. Another alternative plan may be a navigation plan for an AMR type of robot with a circular wheel drive to be replaced by a navigation plan with a differential drive even if the specific type of robot is not defined.

In one embodiment, the warehouse owner may indicate a platform variable to be tracked while importing the plan from a third-party developer. This platform variable may be related to the plan 'charging' and the platform variable may be 'time'. This may be a performance variable that needs to be tracked on how much time is spent by a robot in a state called 'charging'. So, the warehouse owner may be interested in the time spent in charging the robot may translate to the system downtime. So, this leads to system downtime and time being spent in non-productive tasks that has an impact on the overall performance of the system. The platform provides ways to measure these kinds of tasks leading to both productive and non-productive activities for the entire fleet of vehicles that can be later used to calculate the monthly or quarterly performance of the system.

At a high level, the platform provides a combined view of overall status of robots and statistics of charging in a warehouse. This kind of view can be used by system administrators or warehouse managers to calculate the system downtime and take remedial actions. Consider a scenario where the charging plan was built on a task allocation strategy that when the battery level crosses a particular threshold (10% of overall battery charge), then the state may be 'critical' and the robot may be enforced to go and stand in a queue to charge. Another scenario may be when the battery level is "not critical" and also, the workload in the warehouse is minimal. The various solutions generated for making a charging decision may be as given below:
a) If the battery level is in 'critical' state, then update the task to 'queue for charging';
b) If the workload is minimal and the battery level is not in a 'critical' state, charging task may be augmented as 'Yes', and if the battery level reaches 'critical' state, then the robot's task may be updated to 'queue and charge'.
c) Alternative solution may be to update the task to push for proactive charging. So, even if the battery level is not in a 'critical' state (say battery level below 10%), but the workload in the warehouse is low, then, the system doesn't foresee more tasks coming in. In such scenario, the tasks may be update to 'robots may still go ahead and queue for charging'
d) The state is not 'critical', and based on the workload (low, medium or high) , the platform decides which robot may go and charge. This strategy may include type and make of robot (e.g. forklift model vs AGV model) etc.
So, if you consider the solutions generated herein, the actual behavior of 'charging' is the same, however, the solution that needs to be utilized to make decisions varies with the context, environment, robot hardware, and state of the robot. So, once the DR module receives a notification or is triggered, the DR module analyses the platform variable or the information shared by either the plan execution engine or AMR, then, the DR module realises that the plan 'charging' needs to be replaced based on the various solutions discussed hearin. In one embodiment, the task may also be allocated on the robots based on the solutions. Now, the decision to be taken by the platform may be to generate a specific solution or solutions that depend on various functions on how the warehouse operates, its working time (9am - 5pm or night shift), the requirements of the customer for such scenarios to be implemented. For example, the solution may be adapted as per the customer's need for automating the processes. In addition, on normal work days, if the workload in the warehouse is normal, the charging task allocation strategy finalized and generated by the platform may be solution (c) where the platform takes risk mitigation steps or disaster prevention or for optimal performance metrics, by enforcing the charging tasks and deploying plans to ensure the robots are queued for charging.

In other embodiments of the invention, the customers may want the default solution to be (a) generated for platform to choose whenever a circumstance related to the scenario of 'charging' arises, wherein the client may like the robots to continue working in the warehouse till the battery crosses the threshold level or critical stage. This default solution to be invoked may have its consequences, like reduced battery life or other wear and tear of the robot. Similarly, the other alternative solution that the platform may generate may be that the customers may consider that since the charging slots are limited in the warehouse, the best solution, during lower workloads, may be solution (b). The platform generates the solutions, retrieves the relevant plans based on the solutions, applies the updated plans and deploys the updated plans on the robots. The task may be updated to enforce the robots to queue and charge as defined in the solution (b) that was generated by the DR module. In this solution, the robot doesn't wait to hit the critical battery level but uses other predetermined platform variables specified by the customer to ensure that the task to be allocated would be for the robot to proactively get charged within the given slots.

In one embodiment, the dynamic decision making itself on when to go and charge also depends on other platform variables like the inventory workload that are seen by the AMRs and/or the cloud device system, charging slot timings, charging slot availability etc. In addition, the plan execution engines running on the AMRs may navigate them for some time and decide on which solution to apply based on the performance of the robots and which solution is working in the warehouse. This approach may be more of a 'learning' mechanism where the robots sees the performance and tests alternative solutions. The AMRs and/or cloud device system compares the performance and this learning helps the DR module to automatically adapt to the changing scenarios to choose the optimal solution. The scenario considered here is not limiting as the decision making may involve collaborative effort from the cloud node along with AMRs as discussed herein.

In one embodiment, the platform may remove the charging plan and replace it with an alternative plan based on an optimal solution, as discussed herein. So, one of the platform variables that may be tracked may be 'overall system downtime' while deciding the optimal solution for robots spending time during charging or waiting to get charged. Based on events monitored, the DR module may be triggered to take action and hence, the platform may decide a new charging task allocation strategy as discussed herein. The platform analyzes the performance of each task allocation strategy and based on comparison, identifies the best task allocation strategy if there is a degradation of performance. In an embodiment of the invention, consider a scenario related to navigation or a charging plan. The user may want an X strategy, Y strategy or a combination of X, Y, and Z strategies to be enforced that may be pluggable or selected during a working day in a warehouse. For these scenarios, the platform may pick the task allocation strategy from the various available task allocation strategies from the task allocation catalog. In addition, the platform also provides the user an option of simulation wherein the real robots are running on simulation on actual inventory orders. The user can approve some task allocation strategies based on the simulation. The DR module monitors the task allocation strategies, performance of the robots, and generates the task allocation strategy which is running optimally, so that the strategy can be considered for improving the overall performance.

In one embodiment, there may be other potential solutions that may be considered before arriving at a particular decision. Consider a scenario where there are fleets of AMRs navigating. As the platform continuously monitors the performance and behavior, the platform may observe the time spent by the robots waiting for another robot or set of robots to pass through. So, to reduce the inefficiency or system downtime, the DR module may proactively analyse the platform variables, notification information, information received from the robots, and generate optimal solutions to avoid a situation of collision or congestion minimization or system downtime. IN one embodiment, the DR module generates solutions that may include identification of new plans and task allocation strategies to address the runtime events in the operating environment. So, to avoid collision, the solutions that may be generated may be (a) one of the robots may stop while the other robot can pass, much similar to a traffic signal, (b) there may not be a need to stop at a specific point, but the robot can slow down when approaching a collision course, while the other robot or set of robots can speed up. Here, the platform variable that may be considered may be 'velocity', which may give an indication that based on the difference in velocity, the robots can simply pass each other, (c ) external factors may play a role in the decision making, for example - in warehouse kind of environment, warehouse layout and specific factors (WiFi connection, power supply load, lighting issues while navigating, infrastructure customization for better navigation, etc.) The platform may consider appropriate solutions considering the various scenarios, historical trends, context, compatibility issues between plans and/or task allocation strategies, narrow features like warehouse environment factors, robot behavior or capabilities or role etc.

In one embodiment, the platform addresses real-time problems which warehouse owners, solutions providers and customers face for e.g. Promotion sales, 1-day or few hours sale offers etc. In such scenarios, the warehouses receive huge inventory orders or there may be a surge in requests. These are not regular scenarios that can be tracked the whole year. These offers may be provided to users for a short period of time and hence, the order fulfillment task may be too cumbersome, complicated, and needs real time decision making. During this period, the warehouse faces a spike in tasks, drastic changes in the navigation map leading to congestion, forklift taking a longer detour, robots spending too much time in charging etc. From the platform perspective, the platform becomes self-aware as this is reflected in change in platform variables and hence, the system needs to adapt to that change. To adapt to this change, the platform generates solutions that ultimately lead to instructing the plan execution engines running on the AMRs to make the switch and consider new plans. For example, the system may have to find alternative plans based on generated strategies, say for reducing the spin-turns of the robot or orientation that the robot has to take, pulling a better navigation plan, a better inventory order allocation plan, etc. to address the sudden spike in requests.

In one embodiment, the platform considers these spikes in requests as a problem which has been encountered and already dealt with. The platform looks for alternative plans and task allocation strategies which are available in the plan catalog and task allocation catalog, which is part of the catalog store. These alternative plans are identified based on one or more solutions, either based on historical plan variables like - how the task allocation strategy has performed with other robots, for example forklifts, or how a particular task allocation strategy has worked with other robots in different types of warehouses. The platform performs these tasks automatically and the plans are flagged into a mode called 'aggressive'. In this mode, the system optimizes tasks for reducing system downtime and to ensure everything is working.

In one embodiment, the system detects that there is a low workload or for the next few hours, the inventory order is less, and hence, the platform intelligently generates solutions to optimize to avoid wear and tear of the parts of the robot. As discussed herein, the platform may identify the optimal solution based on comparison between one of the platform, plan, and task allocation strategy variables and predetermined criteria or threshold values. The platform may also consider historical platform variables and customer defined platform variables as discussed herein. The platform may ensure that alternative plans are identified to counter the thresholds which may or may not have been met. for e.g. the battery charging baseline plan variable may be 10% of the overall battery level. While identifying the alternative or better plans for optimal performance, the platform may ensure that the identified plans have plan variables that are based on optimal solutions generated based on comparison between the analyzed platform variables and predetermined criteria, as discussed herein.

In one embodiment, the platform may have to face scenarios like failures, or movement between different levels of the warehouse (e.g. from ground floor to first floor). The DR module may consider strategies that include optimization for tasks, like fork rise downtime during navigation. In other similar scenarios, the DR module may consider to avoid wear and tear of the robot and may optimize the spin turns taken by the robot or may want to optimize the robot to wait and get a better path for navigation. This can be done by including a performance plan variable or a threshold as discussed herein. As the DR module is monitoring the fleet of AMRs, the DR module keeps tracking platform variables and when the DR module observes that the performance of some plan variable is reported below the threshold or if there is a failure, then, the DR module is notified to take urgent measures. It is understood that the DR module may get notified either due to a breach in threshold of platform, plan, or task allocation strategy variables, as discussed herein. In this scenario, the robot may not be able to recover itself, then, the DR module extracts the relevant alternative task allocation strategies from the task allocation catalog. For example, one of the objectives may be to optimize the navigation plan option and extract the plans for agents, say type AGV or forklift and ensure the plans are compatible with the plans of the current robot that may need recovery. Herein, in one embodiment, the platform keeps track of plans that have performed better than the current one being executed by one or more plan execution engines running either on the AMR and/or cloud node. The platform applies the task allocation strategy of retrieving high performing plans in real time and deploys them and continues to monitor their performance.

In one embodiment, consider a scenario where there are a team of hybrid robots, for example, AGVs and Forklifts, and a navigation plan is being executed. While designing, the user can mention the count of AGVs or Forklifts or different types of robots that may execute the plan. While defining the plan, instead of just pulling the plans for navigation, the platform can also pull an agent catalog from the catalog store to indicate that in a particular team, two specific types of robots may be present. In case of forklift, then the plan variables may be defined as forklift dimension, turn-in radius, forklift max capacity etc. The navigation plan and the agent catalog gives flexibility to the platform on how the robots may be deployed and what constraints may be placed. For example, the agent catalog may help in narrowing the search scope and indicate that since the forklift is a single wheel powered and has a certain turn-in radius, the navigation plan may further indicate whether the robot can rotate in place or not. These plan variables can be dynamically mapped when the two different types of robots (AGVs and Forklifts) may be deployed. When the robots are deployed, the plan variables are automatically mapped. Now, in one embodiment, the DR module may generate a solution that since the navigation plan is going into a forklift, the robot cannot do in-place navigation and ensures that the plan variables are mapped in accordance with this definition. So, the platform retrieves the accurate plan, maps the plan variables accurately, and takes a decision on deploying them on the specific robots as per the plan.

In one embodiment, each plan and task allocation strategy that has been deployed may have variables that are checked by the DR module to verify whether new capabilities are added or removed to take steps to look for alternatives. Similarly, there are many events that happen during the life of a robot which may need immediate or scheduled attention of the DR module. These events may vary from change in capability, addition of one or more robots, malfunction in hardware/software, changes in warehouse infrastructure, navigation issues, charging issues, unprecedented, new or historical issues etc. The scope of the invention is not limited and may include other events that may arise in a working environment of the heterogeneous device which may need the attention of the DR module and at a higher level, the device platform.

In one embodiment, consider the below details related to complexities in generating solutions for the process of handling real-time scenarios in an operating environment. Given the X number of tasks, the task for a DR module may be to count the number of robots and assign tasks based on minimizing the distance to be travelled. Consider there are 10 tasks and 5 robots, then, the first step may be to pick 5 tasks initially to be allocated to the 5 robots. The question is in which order they may be picked up. A complex task allocation strategy that may be implemented is a 'Travelling salesman problem' on the route that they can take to minimize the overall time taken or consider a simpler task allocation strategy that may allocate a robot to the nearest pick task. Then, another task allocation strategy may be that there may be a 1000 tasks to be processed in an entire night and hence, the task allocation strategy may be to optimize at batch level rather than at a task level. So, in one embodiment, the solution may differ based on the task on hand. So, in one embodiment, to select the appropriate task allocation strategy, one of the factors may be to calculate the max load factor that the robots can handle. There may be some task allocation strategies dealing with 1000 of robots; it's not feasible to do a continuous per second calculation of the entire batch since there may be 4000 or more orders (4 orders/robot) and the optimization may be a complex task. Another task allocation strategy that may be implemented may be differentiating between types of robots. So, the solution may involve making an AGV and a forklift work together and be assigned to the same task with a factor of 1:1. So, every task may have 1 AGV and 1 forklift assigned to process the task. The task allocation strategy may then involve assigning another forklift when the AGV is in the initial state (AGV approaching a pickup location) and the forklift to be assigned the task of reaching the destination when the AGV reaches the final state i.e. AGV reaches the destination for dropping.

So, the first task allocation strategy may be a generalized strategy where there is no differentiation between robots, so, roles that are supported for this task allocation strategy may be represented as '*', which means that all robots are supported, as disclosed earlier. In one embodiment, one of the task allocation strategies may be to support only two types of robots - AGV and forklift to perform the tasks. However, if there is a pick asist AMR in a zone of the warehouse, then, the generated solution for the DR module includes on boarding a pick assist AMR in a fleet that includes a set of an AGV and a forklift. So, the DR module scans to identify a task allocation strategy from the task allocation catalog that involves a pick assist AMR and an Arm to work together. Once such a task allocation strategy is found, then, the identified task allocation strategy may be used with other task allocation strategies that work only for AGV and forklift. With this solution, the DR module may enforce collaboration between robots of completely different types like AGV, forklift, and a pick assist AMR that has expanded to an ARM capability. This makes the platform customizable and robust for any kind of runtime scenarios that are encountered in an operating environment, like a warehouse.

In one embodiment, a task allocation strategy may indicate that a navigation plan may support all AMR that can move. Mostly, there is no guarantee to find the best solution as some of these are NP-hard problems and hence, given the time frame, the best solution obtained is considered as the chosen solution for considering a plan and/or task allocation strategy by the DR module. So, to find the best solution, in addition to the factors discussed herein, other factors may include cut-off time, what is being expected, how much does a task allocation strategy usually take based on the scale it is targeting, or suppose if max load factor is 100, then, how much is the usual time consumed for task assignment, etc..

In one embodiment, the plan may include multiple states, say for example 100 states. The platform provides a feature that allows users to define whether each state or a specific set of states has to be tracked at the time of design. The platform also allows the user to push back the decision making at post-deployment, while the AMR is navigating in a warehouse for example. The user can generically say that all the states need to be tracked at the plan execution time or during navigation or any time post deployment. The platform, by default, tracks generic platform variables or specific plan or task allocation strategy variables. For this tracking, the user may enable the specific platform variables in the plan. Generic platform variables may be "how much time has the robot spent in a plan?" or "How much time does the execution engine spend in executing the plan? or "How much time did the execution engine spend in a particular state of the plan?" As discussed herein, a generic plan variable may be a variable which is applicable across all the plans or task allocation strategies, say navigation or charging plan or picking or sorting task etc. The platform exposes these variables to the user or developer, who may later specify that a particular or set of generic plan variables need to be tracked by the DR module. For a behavior or plan specific variables, some of the variables may be "while navigating, how many turns were taken?" or "how many times deviation was taken from the path that the robot was supposed to follow?" In one embodiment, for tracking plan specific variables, the platform may expect the user to specifically do the configuration at the beginning or else the platform may not be able to track any plan specific variables.

In one embodiment, the tracking of platform variables are done at two levels - at robot level or at a higher level at platform level. At robot level, the robot still needs to gather lower level details as it has more context of the behavior of the robot. For every decision taken by the robot, all the details are not necessarily transferred to the cloud device system as it may lead to huge data to be analysed at the cloud device system level. So, while navigating, when the robot turns or moves or stops, it is the robot that has the granular level details while the abstract level of details are conveyed to the cloud device system. So, the first level of tracking always happens at the robot level. Here, initially, the variables that may be tracked are communicated to the robot. Those variables are also tracked by the DR module of the cloud device system. So, both robots as well as the cloud device system, augment each other's capabilities to track the variables. So, the DR module of the cloud device system receives the values of the variables from the fleet of heterogeneous robots. The plan execution engine running across the heterogeneous robots does the processing on the robot variables to share the values with the DR module of the cloud device system for its processing. The DR module has to make sense of all the values of variables that are reported by the various robots. Consider a fleet of 10 heterogeneous robots and a particular robot breaches the predetermined threshold criteria and this is notified to the DR module of the cloud device system. The DR module then analyses the notification to generate solutions to update the plans or task allocation strategies. In one embodiment, since, one of the objectives of the platform is multi-robot coordination, and the set of robots acts as a team, so, any task allocation that may be done is done for the entire fleet of robots. So, the DR module ensures that there is a sync among the team of robots and every robot knows which task may be executed. The new plan is not updated only for a specific robot but for the entire robot so that every robot within the fleet works as a team and enables the platform to ensure multi-robot coordination. Consider an example that within a team of AMRs, there is one AMR which acquires new capability, say an AGV acquires arm capability. Still, the AGV has to work with the team of AMRs. Now, it is difficult to maintain multi-robot coordination if the DR module replaces the plan only for the AGV that acquired the capability. So, the DR module ensures multi-robot coordination by allowing each team member to perform tasks as per their capability. So, to achieve this team level capability, the DR module may push for deploy of the updates of the plans as well as task allocation strategies on the team of heterogeneous devices.

In one embodiment, consider the task allocation strategies to be implemented for the above example. The generated task allocation strategies may account for this change of new capability acquired by a robot within the fleet of robots Although, same tasks are allocated based on the generated solution to the team, however, the robot which has gained new capability is prioritized, e.g. AGV has acquired an arm capability or aligned with a shuttle or trolley, may be preferred over the other robots to perform the tasks. In this way, the platform ensures multi-robot coordination among different types of robots. This requires a collaborative approach where there is message communication between the robots and DR module of the cloud device system to handle such scenarios.

For example, the plan 'charging' may have platform variables like "how much time is spent on a specific type of robot (e.g. forklift)?" or "when the robot was navigating, how many turns did it take or how many times did it rotate or did the robot do a spin-turn?" Consider another scenario of route navigation, the robot may be taking a lower first-turn and then taking a turn off the aisle. So, the platform while calculating the path may calculate based on the distance of the path and does not penalize the robot rotating in different phases. These phases may be 90 degrees turns while navigating and may be substantial. So, the developer or the user can use either a generic level of plan variable definition or very specific level of detail for tracking. The user also has the option to export a report of the status of the plan variables tracked, performance, end-end status update on each AMR or fleet of AMRs or may be viewed in a user interface, in one of the embodiments of the invention.

In one embodiment, after the plans are deployed, the platform may monitor the fleet of AMRs and may generate a solution that for the current application in the warehouse, it is feasible or more efficient if the AMR performs a specific task - for example, follow the humans in the warehouse or in another scenario, the robot may not be moving around but wait at a specific location for the human to come and place the objects to be dropped. So, in the latter case, the DR module may decide to pull the robot from the plan. All these functionalities related to human-robot coordination, pulling out robots from the mission, task assignment, is handled by the platform.

**In** one embodiment, during the modelling of the plan and task allocation strategy, a user or developer may select various platform variables to influence the way decisions are taken at run time. However, in some circumstances, the final decision may rest with the cloud device system engine, for example, in scenarios such as the battery level of the AMR goes below a critical threshold 403, then, the charging plan with priority plan variable set as 'High' is deployed on the AMR to ensure that the AMR may be docked to the battery interface and is recharged.

**In** one embodiment, a verification module of the platform may determine if the deployment request is on a particular device (AGV or Forklift), and for a navigation plan, whether the navigation stack is loaded on the device and relevant platform variables are checked. In another embodiment, the platform includes a compatibility module to verify the compatibility score of plans. For example, when an alternative plan is identified as a replacement for an existing plan running on a device, a compatibility score is calculated based on whether the plan which is for a particular set of robot (AGV) is also compatible with another type of robot, for example Forklift. The platform may also verify whether the functionality of the plan (e.g. navigation) is also compatible with the current type of robot (Forklift). Another compatibility score calculation may be based on whether the plan is supported with an earlier version of the plan execution engine. For example, the earlier version of the plan execution may be version 1.5 while the new version of the plan execution engine may be 2.0. The compatibility score may be having a scoring mechanism based on different models. One of the models may be having a range of +1 to 5 or -1 to -5. A positive score indicates the plans are compatible and can be an alternative replacement for an existing plan running on the device. A higher positive score may indicate the platform may have a higher approval rating for the new plan based on plan variables as discussed herein, without limiting to popularity, success rate, effective functioning in similar scenarios etc. A negative score may indicate the incompatibility and also the score may have a higher negative rating for a varied device type, which may indicate that the plan is incompatible as the device type deviates from the general functionality or specifications etc.

## Claims

1. A computer implemented method to dynamically update one or more existing plans and one or more existing task allocation strategies deployed on at least one or more of cloud and a plurality of heterogeneous autonomous mobile robots comprising:
monitoring, by a deployment and runtime module (102), at least one or more events on cloud (104a) and the plurality of heterogeneous autonomous mobile robots (104, 214, 216),
wherein the cloud (104a) and plurality of heterogeneous autonomous mobile robots (104, 214, 216) each run one of a plurality of plan execution engines (103) and each of the plurality of heterogeneous autonomous mobile robots (104, 214, 216) collects sensor data, wherein the sensor data and data generated during execution of a plan and task allocation strategy are stored in a sensor and execution data store (106, 204, 230) and
wherein the deployment and runtime module (102) is an interface between the plurality of plan execution engines (103) executing the plan and task allocation strategies such that there is two-way communication between the deployment and runtime module (102) and the plan execution engines (103), a catalog store (101) that includes a plan catalog (111) comprising one or more plans, a task allocation catalog (112) comprising one or more task allocation strategies for deployment and an agent catalog (113) and the sensor and execution data store (106, 204, 230);
and wherein monitoring includes continuously monitoring platform variables retrieved from the execution and sensor data stores (106, 204, 230);
and receiving a notification or a trigger, from at least one or more of plan execution engines running on the autonomous mobile robots (104, 214, 216), that a monitored task allocation strategy, and/or plan variable of an autonomous mobile robot (104, 214, 216) has breached its threshold;
and on receiving a notification or a trigger , analyzing, by the deployment and runtime module (102), one or more existing plans and one or more existing task allocation strategies for updates;
based on the analyzing, generating, by the deployment and runtime module (102), one or more solutions for updating one or more existing plans and one or more existing task allocation strategies;
based on the generated one or more solutions, identifying, by the deployment and runtime module (102), one or more plans and one or more task allocation strategies from the catalog store (101), wherein the identifying comprises:
searching the plan catalog (111) for a new plan and the task allocation catalog (112) for a new task allocation strategy to update the deployed plan and the deployed task allocation strategy;
narrowing the searching of the plan catalog (111) and the task allocation catalog (112) using the robot specific metadata stored in the agent catalog (113);
based on narrowing, identifying the new plan and the new task allocation strategy;
determining whether mapping is to be made at least at one or more of a plan level and a task allocation strategy level; and
based on determining, mapping at least one or more of static and transient variables of the identified plan and the identified task allocation strategy with new values;
updating, by the deployment and runtime module (102), the one or more existing plans with one or more identified plans and the one or more existing task allocation strategies with one or more identified task allocation strategies from the catalog store (101); and
deploying, by the deployment and runtime module (102), the one or more updated plans and the one or more updated task allocation strategies on at least one or more of the cloud (104a) and the plurality of heterogeneous autonomous mobile robots (104, 214, 216).

2. The computer implemented method of claim 1, wherein the analyzing existing plans and existing task allocation strategies for updates comprises,
analyzing a received notification indicating that one or more of the heterogeneous autonomous mobile robots (104, 214, 216) has acquired a new capability;
aligning one or more generated solutions to the new acquired capability; and
identifying one or more new plans and one or more new task allocation strategies based on the one or more aligned solutions.

3. The computer implemented method of claim 2, further comprising,
verifying that the one or more identified new plans are compatible with one or more existing plans and one or more identified new task allocation strategies are compatible with one or more existing task allocation strategies; and
based on the verifying, mapping plan variables of the identified new plans and task allocation strategy variables of the identified new task allocation strategies with new values.

4. The computer implemented method of any one of claims 1 to 3, wherein the generating one or more solutions for updating one or more existing plans and one or more existing task allocation strategies comprises:
comparing one or more values of at least one or more of a platform variable, a plan variable, and a task allocation strategy variable related to one or more of the heterogeneous autonomous mobile robots (104, 214, 216) with threshold values;
based on the comparison, identifying a new plan and a new task allocation strategy for updating the deployed plan and deployed task allocation strategy on the one or more heterogeneous autonomous mobile robots (104, 214, 216); and
mapping variables of identified new plan and variables of identified new task allocation strategies with new values.

5. The computer implemented method of any one of claims 1 to 4, further comprising:
expanding a new capability of a new heterogeneous autonomous mobile robot (104, 214, 216) to one or more heterogeneous autonomous mobile robots (104, 214, 216), wherein the new heterogeneous autonomous mobile robot (104, 214, 216) is of a different robot type;
identifying one or more new plans and one or more new task allocation strategies compatible with the new capability; and
deploying the identified plans and identified task allocation strategies on the one or more heterogeneous autonomous mobile robots (104, 214, 216).

6. The computer implemented method of claim 5, wherein the deployment and runtime module (102) enforces collaboration between heterogeneous autonomous mobile robots (104, 214, 216) of different types.

7. The computer implemented method of any one of claims 1 to 6, further comprising:
analyzing a notification that a new heterogeneous autonomous mobile robot (104, 214, 216) of different type has joined the fleet of plurality of heterogeneous autonomous mobile robots (104, 214, 216);
generating the one or more additional solutions based on the analysis of the notification;
based on the generated additional solutions, identifying new plan and new task allocation strategies;
mapping new values for the plan variables of the new plan and new task allocation strategies for the new heterogeneous autonomous mobile robot (104, 214, 216) of different type; and
deploying the new plans and the new task allocation strategies on the heterogeneous autonomous mobile robot (104, 214, 216) of different type.

8. The computer implemented method of any one of claims 1 to 7, further comprising:
determining an affinity factor related to at least one or more of the heterogeneous autonomous mobile robots (104, 214, 216);
identifying new plan and new task allocation strategy based on the determined affinity factor;
updating the deployed plan and deployed task allocation strategy with identified plan and identified task allocation strategy; and
deploying the updated plan and updated task allocation strategy on one or more of the heterogeneous autonomous mobile robots.

9. The computer implemented method of any one claims 1 to 8, comprising:
analyzing the notification, from at least one or more of plan execution engines running on the heterogeneous autonomous mobile robots (104, 214, 216,), and cloud;
based on analysis of the notification, verifying that the existing plan and existing task allocation strategy, executing on the heterogeneous autonomous mobile robot (104, 214, 216), supports a new behavior;
identifying new plan and task allocation strategy for supporting the new behavior based on the verifying; and
mapping new values to the new plan variable of the identified plan and new values to the new task allocation strategy variable of the identified task allocation strategy to the heterogeneous autonomous mobile robot (104, 214, 216).

10. The computer implemented method of any one of claims 1 to 9, wherein generating the one or more solutions comprising:
identifying roles of one or more heterogeneous autonomous mobile robots (104, 214, 216);
based on the identifying, determining a new plan and new tasks that has a higher priority over the affinity factor over other plans of the catalog store (101); and
mapping new values to the new plan variable of determined plan and allocating determined tasks to the heterogeneous autonomous mobile robot (104, 214, 216).

11. A system to dynamically update one or more existing plans and one or more existing task allocation strategies deployed on at least one or more of cloud and a plurality of heterogeneous autonomous mobile robots comprising:
a catalog store (101);
one or more plan execution engines running on the cloud (104a) and plurality of heterogeneous autonomous mobile robots (104, 214, 216); and
the one or more plan execution engines in communication with one or more modules in the cloud executing the instructions comprising:
a deployment and runtime module (102) monitoring at least one or more events on the cloud (104a) and plurality of heterogeneous autonomous mobile robots (104, 214, 216),
wherein the cloud (104a) and plurality of heterogeneous autonomous mobile robots (104, 214, 216) each run one of a plurality of plan execution engines (103) and each of the plurality of heterogeneous autonomous mobile robots (104, 214, 216) collects sensor data, wherein the sensor data and data generated during execution of a plan and task allocation strategy are stored in a sensor and execution data store (106, 204, 230) and
wherein the deployment and runtime module (102) is an interface between a plurality of plan execution engines (103) executing the plan and task allocation strategies such that there is two-way communication between the deployment and runtime module (102) and the plan execution engines (103), the catalog store (101) that includes a plan catalog (111) comprising one or more plans, a task allocation catalog (112) comprising one or more task allocation strategies for deployment and an agent catalog (113) and the sensor and execution data stores (106, 204, 230);
and wherein monitoring includes continuously monitoring platform variables retrieved from the execution and sensor data stores (106, 204, 230);
and receiving a notification or a trigger , from at least one or more of plan execution engines running on the autonomous mobile robots, that a monitored task allocation strategy, and/or plan variable of an autonomous mobile robot (104, 214, 216) has breached its threshold;
wherein the deployment and runtime module (102) is further configured to carry out the following steps:
on receiving a notification or a trigger, analyzing one or more existing plans and one or more existing task allocation strategies for updates;
based on the analyzing, generating one or more solutions for updating one or more existing plans and one or more task allocation strategies;
based on the generated one or more solutions, identifying one or more plans and one or more existing task allocation strategies from the catalog store (101), wherein the identifying comprises:
searching the plan catalog (111) for a new plan and the task allocation catalog (112) for a new task allocation strategy to update the deployed plan and the deployed task allocation strategy;
narrowing the searching of the plan catalog (111) and the task allocation catalog (112) using the robot specific metadata stored in the agent catalog (113);
based on narrowing, identifying the new plan and the new task allocation strategy;
determining whether mapping is to be made at least at one or more of a plan level and a task allocation strategy level; and
based on determining, mapping at least one or more of static and transient variables of the identified plan and the identified task allocation strategy with new values;
updating the one or more existing plans with one or more identified plans and the one or more existing task allocation strategies with one or more identified task allocation strategies from the catalog store (101); and
deploying one or more updated plans and one or more updated task allocation strategies on at least one or more of the cloud (104a) and the plurality of heterogeneous autonomous mobile robots (104, 214, 216).

12. The system of claim 11, wherein the one or more plan execution engines in communication with one or more modules in the cloud executing the instructions further comprising:
analyzing a change in values of variables of at least one or more of plans and task allocation strategies deployed on one or more of the cloud and plurality of heterogeneous autonomous mobile robots;
based on analysis of the change, deploying at least one or more plans and task allocation strategies to the one or more of the heterogeneous autonomous mobile robots; and
initiating a new operation on the one or more heterogeneous autonomous mobile robots.

13. The system of claim 11 or 12, wherein the one or more plan execution engines in communication with one or more modules in the cloud executing the instructions further comprising:
receiving one or more variables to be tracked, wherein the one or more variables are related to one or more heterogeneous autonomous mobile robots;
identifying one or more new plans and one or more new task allocation strategies based on at least (a) one or more of comparing the received variables with threshold values and (b) compatibility of the new plans and new task allocation strategies with deployed plans and deployed task allocation strategies; and
sending a warning notification at least based on one or more of comparing the received variables being below threshold values and mismatch in the compatibility.

14. The system of any one of claims 11 to 13, wherein the one or more plan execution engines in communication with one or more modules in the cloud executing the instructions comprising:
receiving one or more tasks to be executed by the plurality of heterogeneous autonomous mobile devices;
comparing the variables related to one or more deployed plans and one or more deployed task allocation strategies with threshold values;
rejecting or allocating tasks to the plurality of heterogeneous autonomous mobile robots based on comparison of the variables; and
updating the variables related to one or more existing plans and one or more existing task allocation strategies if tasks are allocated.

15. A computer-readable medium comprising instructions which, when executed by a computer, cause the computer to carry out the method of any one of claims 1 to 10.

## Patentansprüche

1. Computerimplementiertes Verfahren zum dynamischen Aktualisieren eines oder mehrerer existierender Pläne und einer oder mehrerer existierender Aufgabenzuteilungsstrategien, die auf mindestens einer oder mehreren von einer Cloud und einer Vielzahl von heterogenen autonomen mobilen Robotern eingesetzt werden, umfassend:
Überwachen, durch ein Einsatz- und Laufzeitmodul (102), mindestens eines oder mehrerer Ereignisse auf der Cloud (104a) und der Vielzahl von heterogenen autonomen mobilen Robotern (104, 214, 216),
wobei die Cloud (104a) und die Vielzahl von heterogenen autonomen mobilen Robotern (104, 214, 216) jeweils eine einer Vielzahl von Planausführungs-Engines (103) ausführen und jeder der Vielzahl von heterogenen autonomen mobilen Robotern (104, 214, 216) Sensordaten sammelt, wobei die Sensordaten und Daten, die während der Ausführung eines Plans und einer Aufgabenzuteilungsstrategie erzeugt werden, in einem Sensor- und Ausführungsdatenspeicher (106, 204, 230) gespeichert werden, und wobei das Einsatz- und Laufzeitmodul (102) eine Schnittstelle zwischen der Vielzahl von Planausführungs-Engines (103), die den Plan und die Aufgabenzuteilungsstrategien ausführen, derart, dass es eine Zwei-Wege-Kommunikation zwischen dem Einsatz- und Laufzeitmodul (102) und den Planausführungs-Engines (103) gibt, einem Katalogspeicher (101), der einen Plankatalog (111) einschließt, der einen oder mehrere Pläne umfasst, einen Aufgabenzuteilungskatalog (112), der eine oder mehrere Aufgabenzuteilungsstrategien für den Einsatz umfasst, und einen Agentenkatalog (113) und dem Sensor- und Ausführungsdatenspeicher (106, 204, 230) ist;
und wobei das Überwachen das kontinuierliche Überwachen von Plattformvariablen einschließt, die aus dem Ausführungs- und Sensordatenspeicher (106, 204, 230) abgerufen werden;
und Empfangen einer Benachrichtigung oder eines Auslösers, von mindestens einer oder mehreren der Planausführungs-Engines, die auf den autonomen mobilen Robotern (104, 214, 216) ausgeführt werden, dass eine überwachte Aufgabenzuteilungsstrategie und/oder Planvariable eines autonomen mobilen Roboters (104, 214, 216) ihren Schwellenwert überschritten hat;
und beim Empfangen einer Benachrichtigung oder eines Auslösers, Analysieren, durch das Einsatz- und Laufzeitmodul (102), eines oder mehrerer existierender Pläne und einer oder mehrerer existierender Aufgabenzuteilungsstrategien auf Aktualisierungen;
basierend auf dem Analysieren, Erzeugen, durch das Einsatz- und Laufzeitmodul (102), einer oder mehrerer Lösungen zum Aktualisieren eines oder mehrerer existierender Pläne und einer oder mehrerer existierender Aufgabenzuteilungsstrategien;
basierend auf der erzeugten einen oder den erzeugten mehreren Lösungen, Identifizieren, durch das Einsatz- und Laufzeitmodul (102), eines oder mehrerer Pläne und einer oder mehrerer Aufgabenzuteilungsstrategien aus dem Katalogspeicher (101), wobei das Identifizieren umfasst:
Durchsuchen des Plankatalogs (111) nach einem neuen Plan und des Aufgabenzuteilungskatalogs (112) nach einer neuen Aufgabenzuteilungsstrategie, um den eingesetzten Plan und die eingesetzte Aufgabenzuteilungsstrategie zu aktualisieren;
Eingrenzen des Durchsuchens des Plankatalogs (111) und des Aufgabenzuteilungskatalogs (112) unter Verwendung der roboterspezifischen Metadaten, die in dem Agentenkatalog (113) gespeichert sind;
basierend auf dem Eingrenzen, Identifizieren des neuen Plans und der neuen Aufgabenzuteilungsstrategie;
Bestimmen, ob ein Zuordnen auf mindestens einer oder mehreren von einer Planebene und einer Aufgabenzuteilungsstrategieebene vorzunehmen ist; und
basierend auf dem Bestimmen, Zuordnen von mindestens einem oder mehreren aus statischen und transienten Variablen des identifizierten Plans und der identifizierten Aufgabenzuteilungsstrategie mit neuen Werten;
Aktualisieren, durch das Einsatz- und Laufzeitmodul (102), des einen oder der mehreren existierenden Pläne mit einem oder mehreren identifizierten Plänen und der einen oder der mehreren existierenden Aufgabenzuteilungsstrategien mit einer oder mehreren identifizierten Aufgabenzuteilungsstrategien aus dem Katalogspeicher (101); und
Einsetzen, durch das Einsatz- und Laufzeitmodul (102), des einen oder der mehreren aktualisierten Pläne und der einen oder der mehreren aktualisierten Aufgabenzuteilungsstrategien auf mindestens einer oder mehreren von der Cloud (104a) und der Vielzahl von heterogenen autonomen mobilen Robotern (104, 214, 216).

2. Computerimplementiertes Verfahren nach Anspruch 1, wobei das Analysieren existierender Pläne und existierender Aufgabenzuteilungsstrategien auf Aktualisierungen Folgendes umfasst,
Analysieren einer empfangenen Benachrichtigung, die angibt, dass einer oder mehrere der heterogenen autonomen mobilen Roboter (104, 214, 216) eine neue Fähigkeit erworben hat;
Ausrichten einer oder mehrerer erzeugter Lösungen auf die neue erworbene Fähigkeit; und
Identifizieren eines oder mehrerer neuer Pläne und einer oder mehrerer neuer Aufgabenzuteilungsstrategien basierend auf der einen oder den mehreren ausgerichteten Lösungen.

3. Computerimplementiertes Verfahren nach Anspruch 2, ferner umfassend,
Verifizieren, dass der eine oder die mehreren identifizierten neuen Pläne kompatibel mit einem oder mehreren existierenden Plänen sind und eine oder mehrere identifizierte neue Aufgabenzuteilungsstrategien kompatibel mit einer oder mehreren existierenden Aufgabenzuteilungsstrategien sind; und
basierend auf dem Verifizieren, Zuordnen von Planvariablen der identifizierten neuen Pläne und Aufgabenzuteilungsstrategievariablen der identifizierten neuen Aufgabenzuteilungsstrategien mit neuen Werten.

4. Computerimplementiertes Verfahren nach einem der Ansprüche 1 bis 3, wobei das Erzeugen einer oder mehrerer Lösungen zum Aktualisieren eines oder mehrerer existierender Pläne und einer oder mehrerer existierender Aufgabenzuteilungsstrategien Folgendes umfasst:
Vergleichen eines oder mehrerer Werte von mindestens einer oder mehreren von einer Plattformvariable, einer Planvariable und einer Aufgabenzuteilungsstrategievariable, die sich auf einen oder mehrere der heterogenen autonomen mobilen Roboter (104, 214, 216) beziehen, mit Schwellenwerten;
basierend auf dem Vergleich, Identifizieren eines neuen Plans und einer neuen Aufgabenzuteilungsstrategie zum Aktualisieren des eingesetzten Plans und der eingesetzten Aufgabenzuteilungsstrategie auf dem einen oder den mehreren heterogenen autonomen mobilen Robotern (104, 214, 216); und
Zuordnen von Variablen des identifizierten neuen Plans und Variablen identifizierter neuer Aufgabenzuteilungsstrategien mit neuen Werten.

5. Computerimplementiertes Verfahren nach einem der Ansprüche 1 bis 4, ferner umfassend:
Erweitern einer neuen Fähigkeit eines neuen heterogenen autonomen mobilen Roboters (104, 214, 216) auf einen oder mehrere heterogene autonome mobile Roboter (104, 214, 216), wobei der neue heterogene autonome mobile Roboter (104, 214, 216) von einem unterschiedlichen Robotertyp ist;
Identifizieren eines oder mehrerer neuer Pläne und einer oder mehrerer neuer Aufgabenzuteilungsstrategien, die kompatibel mit der neuen Fähigkeit sind; und
Einsetzen der identifizierten Pläne und identifizierten Aufgabenzuteilungsstrategien auf dem einen oder den mehreren heterogenen autonomen mobilen Robotern (104, 214, 216).

6. Computerimplementiertes Verfahren nach Anspruch 5, wobei das Einsatz- und Laufzeitmodul (102) eine Zusammenarbeit zwischen heterogenen autonomen mobilen Robotern (104, 214, 216) unterschiedlicher Typen erzwingt.

7. Computerimplementiertes Verfahren nach einem der Ansprüche 1 bis 6, ferner umfassend:
Analysieren einer Benachrichtigung, dass ein neuer heterogener autonomer mobiler Roboter (104, 214, 216) von unterschiedlichem Typ sich der Flotte der Vielzahl von heterogenen autonomen mobilen Robotern (104, 214, 216) angeschlossen hat;
Erzeugen der einen oder der mehreren zusätzlichen Lösungen basierend auf der Analyse der Benachrichtigung;
basierend auf den erzeugten zusätzlichen Lösungen, Identifizieren eines neuen Plans und neuer Aufgabenzuteilungsstrategien;
Zuordnen neuer Werte für die Planvariablen des neuen Plans und der neuen Aufgabenzuteilungsstrategien für den neuen heterogenen autonomen mobilen Roboter (104, 214, 216) von unterschiedlichem Typ; und
Einsetzen der neuen Pläne und der neuen Aufgabenzuteilungsstrategien auf dem heterogenen autonomen mobilen Roboter (104, 214, 216) von unterschiedlichem Typ.

8. Computerimplementiertes Verfahren nach einem der Ansprüche 1 bis 7, ferner umfassend:
Bestimmen eines Affinitätsfaktors, der sich auf mindestens einen oder mehrere der heterogenen autonomen mobilen Roboter (104, 214, 216) bezieht;
Identifizieren eines neuen Plans und einer neuen Aufgabenzuteilungsstrategie basierend auf dem bestimmten Affinitätsfaktor;
Aktualisieren des eingesetzten Plans und der eingesetzten Aufgabenzuteilungsstrategie mit dem identifizierten Plan und der identifizierten Aufgabenzuteilungsstrategie; und
Einsetzen des aktualisierten Plans und der aktualisierten Aufgabenzuteilungsstrategie auf einem oder mehreren der heterogenen autonomen mobilen Roboter.

9. Computerimplementiertes Verfahren nach einem Ansprüche 1 bis 8, umfassend:
Analysieren der Benachrichtigung, von mindestens einer oder mehreren von Planausführungs-Engines, die auf den heterogenen autonomen mobilen Robotern (104, 214, 216,) ausgeführt werden, und der Cloud;
basierend auf der Analyse der Benachrichtigung, Verifizieren, dass der existierende Plan und die existierende Aufgabenzuteilungsstrategie, die auf dem heterogenen autonomen mobilen Roboter (104, 214, 216) ausgeführt werden, ein neues Verhalten unterstützen;
Identifizieren eines neuen Plans und Aufgabenzuteilungsstrategie zum Unterstützen des neuen Verhaltens basierend auf dem Verifizieren; und
Zuordnen neuer Werte zu der neuen Planvariable des identifizierten Plans und neuer Werte zu der neuen Aufgabenzuteilungsstrategievariable der identifizierten Aufgabenzuteilungsstrategie auf den heterogenen autonomen mobilen Roboter (104, 214, 216).

10. Computerimplementiertes Verfahren nach einem der Ansprüche 1 bis 9, wobei das Erzeugen der einen oder der mehreren Lösungen umfassend:
Identifizieren von Rollen eines oder mehrerer heterogener autonomer mobiler Roboter (104, 214, 216);
basierend auf dem Identifizieren, Bestimmen eines neuen Plans und neuer Aufgaben, der eine höhere Priorität über den Affinitätsfaktor über anderen Plänen des Katalogspeichers (101) aufweist; und
Zuordnen neuer Werte auf die neue Planvariable des bestimmten Plans und Zuteilen bestimmter Aufgaben an den heterogenen autonomen mobilen Roboter (104, 214, 216).

11. System zum dynamischen Aktualisieren eines oder mehrerer existierender Pläne und einer oder mehrerer existierender Aufgabenzuteilungsstrategien, die auf mindestens einer oder mehreren von einer Cloud und einer Vielzahl von heterogenen autonomen mobilen Robotern eingesetzt werden, umfassend:
einen Katalogspeicher (101);
eine oder mehrere Planausführungs-Engines, die auf der Cloud (104a) und der Vielzahl von heterogenen autonomen mobilen Robotern (104, 214, 216) ausgeführt werden; und
die eine oder die mehreren Planausführungs-Engines in Kommunikation mit einem oder mehreren Modulen in der Cloud, die die Anweisungen ausführen, umfassend:
ein Einsatz- und Laufzeitmodul (102), das mindestens ein oder mehrere Ereignisse auf der Cloud (104a) und der Vielzahl von heterogenen autonomen mobilen Robotern (104, 214, 216) überwacht,
wobei die Cloud (104a) und die Vielzahl von heterogenen autonomen mobilen Robotern (104, 214, 216) jeweils eine einer Vielzahl von Planausführungs-Engines (103) ausführen und jeder der Vielzahl von heterogenen autonomen mobilen Robotern (104, 214, 216) Sensordaten sammelt, wobei die Sensordaten und Daten, die während der Ausführung eines Plans und einer Aufgabenzuteilungsstrategie erzeugt werden, in einem Sensor- und Ausführungsdatenspeicher (106, 204, 230) gespeichert werden, und wobei das Einsatz- und Laufzeitmodul (102) eine Schnittstelle zwischen einer Vielzahl von Planausführungs-Engines (103), die den Plan und die Aufgabenzuteilungsstrategien ausführen, derart, dass es eine Zwei-Wege-Kommunikation zwischen dem Einsatz- und Laufzeitmodul (102) und den Planausführungs-Engines (103) gibt, dem Katalogspeicher (101), der einen Plankatalog (111) einschließt, der einen oder mehrere Pläne umfasst, einen Aufgabenzuteilungskatalog (112), der eine oder mehrere Aufgabenzuteilungsstrategien für den Einsatz umfasst, und einen Agentenkatalog (113) und dem Ausführungs- und Sensordatenspeicher (106, 204, 230) ist;
und wobei das Überwachen das kontinuierliche Überwachen von Plattformvariablen einschließt, die aus dem Ausführungs- und Sensordatenspeicher (106, 204, 230) abgerufen werden;
und Empfangen einer Benachrichtigung oder eines Auslösers, von mindestens einer oder mehreren von Planausführungs-Engines, die auf den autonomen mobilen Robotern ausgeführt werden, dass eine überwachte Aufgabenzuteilungsstrategie und/oder Planvariable eines autonomen mobilen Roboters (104, 214, 216) ihren Schwellenwert überschritten hat;
wobei das Einsatz- und Laufzeitmodul (102) ferner konfiguriert ist, um die folgenden Schritte auszuführen:
beim Empfangen einer Benachrichtigung oder eines Auslösers, Analysieren eines oder mehrerer existierender Pläne und einer oder mehrerer existierender Aufgabenzuteilungsstrategien auf Aktualisierungen;
basierend auf dem Analysieren, Erzeugen einer oder mehrerer Lösungen zum Aktualisieren eines oder mehrerer existierender Pläne und einer oder mehrerer Aufgabenzuteilungsstrategien;
basierend auf der erzeugten einen oder den erzeugten mehreren Lösungen, Identifizieren eines oder mehrerer Pläne und einer oder mehrerer existierender Aufgabenzuteilungsstrategien aus dem Katalogspeicher (101), wobei das Identifizieren Folgendes umfasst:
Durchsuchen des Plankatalogs (111) nach einem neuen Plan und des Aufgabenzuteilungskatalogs (112) nach einer neuen Aufgabenzuteilungsstrategie, um den eingesetzten Plan und die eingesetzte Aufgabenzuteilungsstrategie zu aktualisieren;
Eingrenzen des Durchsuchens des Plankatalogs (111) und des Aufgabenzuteilungskatalogs (112) unter Verwendung der roboterspezifischen Metadaten, die in dem Agentenkatalog (113) gespeichert sind;
basierend auf dem Eingrenzen, Identifizieren des neuen Plans und der neuen Aufgabenzuteilungsstrategie;
Bestimmen, ob ein Zuordnen auf mindestens einer oder mehreren von einer Planebene und einer Aufgabenzuteilungsstrategieebene vorzunehmen ist; und
basierend auf dem Bestimmen, Zuordnen von mindestens einem oder mehreren aus statischen und transienten Variablen des identifizierten Plans und der identifizierten Aufgabenzuteilungsstrategie mit neuen Werten;
Aktualisieren des einen oder der mehreren existierenden Pläne mit einem oder mehreren identifizierten Plänen und der einen oder der mehreren existierenden Aufgabenzuteilungsstrategien mit einer oder mehreren identifizierten Aufgabenzuteilungsstrategien aus dem Katalogspeicher (101); und
Einsetzen eines oder mehrerer aktualisierter Pläne und einer oder mehrerer aktualisierter Aufgabenzuteilungsstrategien auf mindestens einer oder mehreren von der Cloud (104a) und der Vielzahl von heterogenen autonomen mobilen Robotern (104, 214, 216).

12. System nach Anspruch 11, wobei die eine oder die mehreren Planausführungs-Engines in Kommunikation mit einem oder mehreren Modulen in der Cloud, die die Anweisungen ausführen, ferner umfassend:
Analysieren einer Änderung von Werten von Variablen von mindestens einem oder mehreren von Plänen und Aufgabenzuteilungsstrategien, die auf einer oder mehreren von der Cloud und der Vielzahl von heterogenen autonomen mobilen Robotern eingesetzt werden;
basierend auf der Analyse der Änderung, Einsetzen von mindestens einem oder mehreren Plänen und Aufgabenzuteilungsstrategien auf den einen oder die mehreren der heterogenen autonomen mobilen Roboter; und
Initiieren eines neuen Vorgangs auf dem einen oder den mehreren heterogenen autonomen mobilen Robotern.

13. System nach Anspruch 11 oder 12, wobei die eine oder die mehreren Planausführungs-Engines in Kommunikation mit einem oder mehreren Modulen in der Cloud, die die Anweisungen ausführen, ferner umfassend:
Empfangen einer oder mehrerer zu verfolgender Variablen, wobei sich die eine oder die mehreren Variablen auf einen oder mehrere heterogene autonome mobile Roboter beziehen;
Identifizieren eines oder mehrerer neuer Pläne und einer oder mehrerer neuer Aufgabenzuteilungsstrategien basierend auf mindestens (a) einem oder mehreren von Vergleichen der empfangenen Variablen mit Schwellenwerten und (b) Kompatibilität der neuen Pläne und der neuen Aufgabenzuteilungsstrategien mit eingesetzten Plänen und eingesetzten Aufgabenzuteilungsstrategien; und
Senden einer Warnbenachrichtigung mindestens basierend auf einem oder mehreren von Vergleichen der empfangenen Variablen, die unter Schwellenwerten liegen, und einer Diskrepanz in der Kompatibilität.

14. System nach einem der Ansprüche 11 bis 13, wobei die eine oder die mehreren Planausführungs-Engines in Kommunikation mit einem oder mehreren Modulen in der Cloud, die die Anweisungen ausführen, umfassend:
Empfangen einer oder mehrerer Aufgaben, die durch die Vielzahl von heterogenen autonomen mobilen Vorrichtungen auszuführen sind;
Vergleichen der Variablen, die sich auf einen oder mehrere eingesetzte Pläne und eine oder mehrere eingesetzte Aufgabenzuteilungsstrategien beziehen, mit Schwellenwerten;
Ablehnen oder Zuteilen von Aufgaben an die Vielzahl von heterogenen autonomen mobilen Robotern basierend auf einem Vergleich der Variablen; und
Aktualisieren der Variablen, die sich auf einen oder mehrere existierende Pläne und eine oder mehrere existierende Aufgabenzuteilungsstrategien beziehen, wenn Aufgaben zugeteilt werden.

15. Computerlesbares Medium, umfassend Anweisungen, die, wenn sie durch einen Computer ausgeführt werden, den Computer veranlassen, das Verfahren nach einem der Ansprüche 1 bis 10 auszuführen.

## Revendications

1. Procédé mis en œuvre par ordinateur permettant de mettre à jour dynamiquement un ou plusieurs plans existants et une ou plusieurs stratégies d'attribution de tâches existantes déployés sur au moins un ou plusieurs parmi le cloud et une pluralité de robots mobiles autonomes hétérogènes comprenant :
la surveillance, par un module de déploiement et d'exécution (102), d'au moins un ou plusieurs événements sur le cloud (104a) et sur la pluralité de robots mobiles autonomes hétérogènes (104, 214, 216),
dans lequel le cloud (104a) et la pluralité de robots mobiles autonomes hétérogènes (104, 214, 216) exécutent chacun l'un d'une pluralité de moteurs d'exécution de plans (103) et chacun de la pluralité de robots mobiles autonomes hétérogènes (104, 214, 216) collecte des données de capteurs, dans lequel les données de capteurs et les données générées lors de l'exécution d'un plan et d'une stratégie d'attribution de tâches sont stockées dans un magasin de données de capteurs et d'exécution (106, 204, 230) et
dans lequel le module de déploiement et d'exécution (102) est une interface entre la pluralité de moteurs d'exécution de plans (103) exécutant le plan et les stratégies d'attribution de tâches de sorte qu'il existe une communication bidirectionnelle entre le module de déploiement et d'exécution (102) et les moteurs d'exécution de plans (103), un magasin de catalogues (101) qui comporte un catalogue de plans (111) comprenant un ou plusieurs plans, un catalogue d'attribution de tâches (112) comprenant une ou plusieurs stratégies d'attribution de tâches pour le déploiement et un catalogue d'agents (113) et le magasin de données de capteurs et d'exécution (106, 204, 230) ;
et dans lequel la surveillance comporte la surveillance continue de variables de plateforme récupérées à partir des magasins de données de capteurs et d'exécution (106, 204, 230) ;
et la réception d'une notification ou d'un déclencheur, à partir d'au moins un ou plusieurs parmi des moteurs d'exécution de plans fonctionnant sur les robots mobiles autonomes (104, 214, 216), indiquant qu'une stratégie d'attribution de tâches surveillée et/ou une variable de plan d'un robot mobile autonome (104, 214, 216) a dépassé son seuil ;
et, à la réception d'une notification ou d'un déclencheur, l'analyse, par le module de déploiement et d'exécution (102), d'un ou de plusieurs plans existants et d'une ou de plusieurs stratégies d'attribution de tâches existantes pour les mises à jour ;
sur la base de l'analyse, la génération, par le module de déploiement et d'exécution (102), d'une ou de plusieurs solutions pour la mise à jour d'un ou de plusieurs plans existants et d'une ou de plusieurs stratégies d'attribution de tâches existantes ;
sur la base des une ou plusieurs solutions générées, l'identification, par le module de déploiement et d'exécution (102), d'un ou de plusieurs plans et d'une ou de plusieurs stratégies d'attribution de tâches à partir du magasin de catalogues (101), dans lequel l'identification comprend :
la recherche dans le catalogue de plans (111) d'un nouveau plan et dans le catalogue d'attribution de tâches (112) d'une nouvelle stratégie d'attribution de tâches pour mettre à jour le plan déployé et la stratégie d'attribution de tâches déployée ;
la restriction de la recherche dans le catalogue de plans (111) et le catalogue d'attribution de tâches (112) à l'aide des métadonnées spécifiques au robot stockées dans le catalogue d'agents (113) ;
sur la base de la restriction, l'identification du nouveau plan et de la nouvelle stratégie d'attribution de tâches ;
le fait de déterminer si un mappage doit être effectué au moins à l'un ou plusieurs parmi un niveau de plan et un niveau de stratégie d'attribution de tâches ; et
sur la base de la détermination, le mappage d'au moins une ou plusieurs parmi des variables statiques et transitoires du plan identifié et de la stratégie d'attribution de tâches identifiée avec de nouvelles valeurs ;
la mise à jour, par le module de déploiement et d'exécution (102), des un ou plusieurs plans existants avec un ou plusieurs plans identifiés et des une ou plusieurs stratégies d'attribution de tâches existantes avec une ou plusieurs stratégies d'attribution de tâches identifiées à partir du magasin de catalogues (101) ; et
le déploiement, par le module de déploiement et d'exécution (102), des un ou plusieurs plans mis à jour et des une ou plusieurs stratégies d'attribution de tâches mises à jour sur au moins un ou plusieurs parmi le cloud (104a) et la pluralité de robots mobiles autonomes hétérogènes (104, 214, 216).

2. Procédé mis en œuvre par ordinateur selon la revendication 1, dans lequel l'analyse de plans existants et de stratégies d'attribution de tâches existantes pour les mises à jour comprend,
l'analyse d'une notification reçue indiquant qu'un ou plusieurs des robots mobiles autonomes hétérogènes (104, 214, 216) ont acquis une nouvelle capacité ;
l'alignement d'une ou de plusieurs solutions générées sur la nouvelle capacité acquise ; et
l'identification d'un ou de plusieurs nouveaux plans et d'une ou de plusieurs nouvelles stratégies d'attribution de tâches sur la base des une ou plusieurs solutions alignées.

3. Procédé mis en œuvre par ordinateur selon la revendication 2, comprenant en outre,
la vérification que les un ou plusieurs nouveaux plans identifiés sont compatibles avec un ou plusieurs plans existants et qu'une ou plusieurs nouvelles stratégies d'attribution de tâches identifiées sont compatibles avec une ou plusieurs stratégies d'attribution de tâches existantes ; et
sur la base de la vérification, le mappage de variables de plan des nouveaux plans identifiés et de variables de stratégie d'attribution de tâches des nouvelles stratégies d'attribution de tâches identifiées avec de nouvelles valeurs.

4. Procédé mis en œuvre par ordinateur selon l'une quelconque des revendications 1 à 3, dans lequel la génération d'une ou de plusieurs solutions pour la mise à jour d'un ou de plusieurs plans existants et d'une ou de plusieurs stratégies d'attribution de tâches existantes comprend :
la comparaison d'une ou de plusieurs valeurs d'au moins une ou plusieurs parmi une variable de plateforme, une variable de plan et une variable de stratégie d'attribution de tâches liées à un ou plusieurs des robots mobiles autonomes hétérogènes (104, 214, 216) avec des valeurs seuils ;
sur la base de la comparaison, l'identification d'un nouveau plan et d'une nouvelle stratégie d'attribution de tâches pour mettre à jour le plan déployé et la stratégie d'attribution de tâches déployée sur les un ou plusieurs robots mobiles autonomes hétérogènes (104, 214, 216) ; et
le mappage de variables d'un nouveau plan identifié et de variables de nouvelles stratégies d'attribution de tâches identifiées avec de nouvelles valeurs.

5. Procédé mis en œuvre par ordinateur selon l'une quelconque des revendications 1 à 4, comprenant en outre :
l'extension d'une nouvelle capacité d'un nouveau robot mobile autonome hétérogène (104, 214, 216) à un ou plusieurs robots mobiles autonomes hétérogènes (104, 214, 216), dans lequel le nouveau robot mobile autonome hétérogène (104, 214, 216) est d'un type de robot différent ;
l'identification d'un ou de plusieurs nouveaux plans et d'une ou de plusieurs nouvelles stratégies d'attribution de tâches compatibles avec la nouvelle capacité ; et
le déploiement des plans identifiés et des stratégies d'attribution de tâches identifiées sur les un ou plusieurs robots mobiles autonomes hétérogènes (104, 214, 216).

6. Procédé mis en œuvre par ordinateur selon la revendication 5, dans lequel le module de déploiement et d'exécution (102) impose la collaboration entre des robots mobiles autonomes hétérogènes (104, 214, 216) de types différents.

7. Procédé mis en œuvre par ordinateur selon l'une quelconque des revendications 1 à 6, comprenant en outre :
l'analyse d'une notification indiquant qu'un nouveau robot mobile autonome hétérogène (104, 214, 216) d'un type différent a rejoint la flotte d'une pluralité de robots mobiles autonomes hétérogènes (104, 214, 216) ;
la génération des une ou plusieurs solutions supplémentaires sur la base de l'analyse de la notification ;
sur la base des solutions supplémentaires générées, l'identification d'un nouveau plan et de nouvelles stratégies d'attribution de tâches ;
le mappage de nouvelles valeurs pour les variables de plan du nouveau plan et de nouvelles stratégies d'attribution de tâches pour le nouveau robot mobile autonome hétérogène (104, 214, 216) d'un type différent ; et
le déploiement des nouveaux plans et des nouvelles stratégies d'attribution de tâches sur le robot mobile autonome hétérogène (104, 214, 216) d'un type différent.

8. Procédé mis en œuvre par ordinateur selon l'une quelconque des revendications 1 à 7, comprenant en outre :
la détermination d'un facteur d'affinité lié à au moins un ou plusieurs des robots mobiles autonomes hétérogènes (104, 214, 216) ;
l'identification d'un nouveau plan et d'une nouvelle stratégie d'attribution de tâches sur la base du facteur d'affinité déterminé ;
la mise à jour du plan déployé et de la stratégie d'attribution de tâches déployée avec le plan identifié et la stratégie d'attribution de tâches identifiée ; et
le déploiement du plan mis à jour et de la stratégie d'attribution de tâches mise à jour sur un ou plusieurs des robots mobiles autonomes hétérogènes.

9. Procédé mis en œuvre par ordinateur selon l'une quelconque des revendications 1 à 8, comprenant :
l'analyse de la notification, à partir d'au moins un ou plusieurs parmi des moteurs d'exécution de plans fonctionnant sur les robots mobiles autonomes hétérogènes (104, 214, 216) et le cloud ;
sur la base de l'analyse de la notification, la vérification que le plan existant et la stratégie d'attribution de tâches existante, exécutés sur le robot mobile autonome hétérogène (104, 214, 216), prennent en charge un nouveau comportement ;
l'identification d'un nouveau plan et d'une nouvelle stratégie d'attribution de tâches pour prendre en charge le nouveau comportement sur la base de la vérification ; et
le mappage de nouvelles valeurs à la nouvelle variable de plan du plan identifié et de nouvelles valeurs à la nouvelle variable de stratégie d'attribution de tâches de la stratégie d'attribution de tâches identifiée pour le robot mobile autonome hétérogène (104, 214, 216).

10. Procédé mis en œuvre par ordinateur selon l'une quelconque des revendications 1 à 9, dans lequel la génération des une ou plusieurs solutions comprend :
l'identification de rôles d'un ou de plusieurs robots mobiles autonomes hétérogènes (104, 214, 216) ;
sur la base de l'identification, la détermination d'un nouveau plan et de nouvelles tâches qui ont une priorité plus élevée sur le facteur d'affinité par rapport aux autres plans du magasin de catalogues (101) ; et
le mappage de nouvelles valeurs à la nouvelle variable de plan du plan déterminé et l'attribution de tâches déterminées au robot mobile autonome hétérogène (104, 214, 216).

11. Système permettant de mettre à jour dynamiquement un ou plusieurs plans existants et une ou plusieurs stratégies d'attribution de tâches existantes déployés sur au moins un ou plusieurs parmi le cloud et une pluralité de robots mobiles autonomes hétérogènes, comprenant :
un magasin de catalogues (101) ;
un ou plusieurs moteurs d'exécution de plans fonctionnant sur le cloud (104a) et la pluralité de robots mobiles autonomes hétérogènes (104, 214, 216) ; et
les un ou plusieurs moteurs d'exécution de plans en communication avec un ou plusieurs modules dans le cloud exécutant les instructions comprenant :
un module de déploiement et d'exécution (102) surveillant au moins un ou plusieurs événements sur le cloud (104a) et la pluralité de robots mobiles autonomes hétérogènes (104, 214, 216),
dans lequel le cloud (104a) et la pluralité de robots mobiles autonomes hétérogènes (104, 214, 216) exécutent chacun l'un d'une pluralité de moteurs d'exécution de plans (103) et chacun de la pluralité de robots mobiles autonomes hétérogènes (104, 214, 216) collecte des données de capteurs, dans lequel les données de capteurs et les données générées lors de l'exécution d'un plan et d'une stratégie d'attribution de tâches sont stockées dans un magasin de données de capteurs et d'exécution (106, 204, 230) et
dans lequel le module de déploiement et d'exécution (102) est une interface entre une pluralité de moteurs d'exécution de plans (103) exécutant le plan et les stratégies d'attribution de tâches de sorte qu'il existe une communication bidirectionnelle entre le module de déploiement et d'exécution (102) et les moteurs d'exécution de plans (103), le magasin de catalogues (101) qui comporte un catalogue de plans (111) comprenant un ou plusieurs plans, un catalogue d'attribution de tâches (112) comprenant une ou plusieurs stratégies d'attribution de tâches pour le déploiement et un catalogue d'agents (113) et les magasins de données de capteurs et d'exécution (106, 204, 230) ;
et dans lequel la surveillance comporte la surveillance continue de variables de plateforme récupérées à partir des magasins de données de capteurs et d'exécution (106, 204, 230) ;
et la réception d'une notification ou d'un déclencheur, à partir d'au moins un ou plusieurs parmi des moteurs d'exécution de plans fonctionnant sur les robots mobiles autonomes, indiquant qu'une stratégie d'attribution de tâches surveillée et/ou une variable de plan d'un robot mobile autonome (104, 214, 216) a dépassé son seuil ;
dans lequel le module de déploiement et d'exécution (102) est en outre configuré pour effectuer les étapes suivantes :
à la réception d'une notification ou d'un déclencheur, l'analyse d'un ou de plusieurs plans existants et d'une ou de plusieurs stratégies d'attribution de tâches existantes pour les mises à jour ;
sur la base de l'analyse, la génération d'une ou de plusieurs solutions pour la mise à jour d'un ou de plusieurs plans existants et d'une ou de plusieurs stratégies d'attribution de tâches ;
sur la base des une ou plusieurs solutions générées, l'identification d'un ou de plusieurs plans et d'une ou de plusieurs stratégies d'attribution de tâches existantes à partir du magasin de catalogues (101), dans lequel l'identification comprend :
la recherche dans le catalogue de plans (111) d'un nouveau plan et dans le catalogue d'attribution de tâches (112) d'une nouvelle stratégie d'attribution de tâches pour mettre à jour le plan déployé et la stratégie d'attribution de tâches déployée ;
la restriction de la recherche dans le catalogue de plans (111) et le catalogue d'attribution de tâches (112) à l'aide des métadonnées spécifiques au robot stockées dans le catalogue d'agents (113) ;
sur la base de la restriction, l'identification du nouveau plan et de la nouvelle stratégie d'attribution de tâches ;
le fait de déterminer si un mappage doit être effectué au moins à l'un ou plusieurs parmi un niveau de plan et un niveau de stratégie d'attribution de tâches ; et
sur la base de la détermination, le mappage d'au moins une ou plusieurs parmi des variables statiques et transitoires du plan identifié et de la stratégie d'attribution de tâches identifiée avec de nouvelles valeurs ;
la mise à jour des un ou plusieurs plans existants avec un ou plusieurs plans identifiés et des une ou plusieurs stratégies d'attribution de tâches existantes avec une ou plusieurs stratégies d'attribution de tâches identifiées à partir du magasin de catalogues (101) ; et
le déploiement d'un ou de plusieurs plans mis à jour et d'une ou de plusieurs stratégies d'attribution de tâches mises à jour sur au moins un ou plusieurs parmi le cloud (104a) et la pluralité de robots mobiles autonomes hétérogènes (104, 214, 216).

12. Système selon la revendication 11, dans lequel les un ou plusieurs moteurs d'exécution de plans en communication avec un ou plusieurs modules dans le cloud exécutant les instructions comprenant en outre :
l'analyse d'une modification de valeurs de variables d'au moins un ou plusieurs parmi des plans et des stratégies d'attribution de tâches déployés sur l'un ou plusieurs parmi le cloud et la pluralité de robots mobiles autonomes hétérogènes;
sur la base de l'analyse de la modification, le déploiement d'au moins un ou plusieurs plans et stratégies d'attribution de tâches sur les un ou plusieurs des robots mobiles autonomes hétérogènes ; et
l'initiation d'une nouvelle opération sur les un ou plusieurs robots mobiles autonomes hétérogènes.

13. Système selon la revendication 11 ou 12, dans lequel les un ou plusieurs moteurs d'exécution de plans en communication avec un ou plusieurs modules dans le cloud exécutant les instructions comprenant en outre :
la réception d'une ou de plusieurs variables à suivre, dans lequel les une ou plusieurs variables sont liées à un ou plusieurs robots mobiles autonomes hétérogènes ;
l'identification d'un ou de plusieurs nouveaux plans et d'une ou de plusieurs nouvelles stratégies d'attribution de tâches sur la base d'au moins (a) une ou plusieurs parmi la comparaison des variables reçues avec des valeurs seuils et (b) la compatibilité des nouveaux plans et des nouvelles stratégies d'attribution de tâches avec les plans déployés et les stratégies d'attribution de tâches déployées ; et
l'envoi d'une notification d'avertissement sur la base d'au moins une ou plusieurs parmi la comparaison des variables reçues étant inférieures à des valeurs seuils et l'existence d'une incompatibilité.

14. Système selon l'une quelconque des revendications 11 à 13, dans lequel les un ou plusieurs moteurs d'exécution de plans en communication avec un ou plusieurs modules dans le cloud exécutant les instructions comprenant :
la réception d'une ou de plusieurs tâches à exécuter par la pluralité de dispositifs mobiles autonomes hétérogènes ;
la comparaison des variables liées à un ou plusieurs plans déployés et à une ou plusieurs stratégies d'attribution des tâches déployées avec des valeurs seuils ;
le rejet ou l'attribution de tâches à la pluralité de robots mobiles autonomes hétérogènes sur la base de la comparaison des variables ; et
la mise à jour des variables liées à un ou plusieurs plans existants et à une ou plusieurs stratégies d'attribution des tâches existantes si des tâches sont attribuées.

15. Support lisible par ordinateur comprenant des instructions qui, lorsqu'elles sont exécutées par un ordinateur, amènent l'ordinateur à effectuer le procédé selon l'une quelconque des revendications 1 à 10.
